# EUROPÄISCHE PATENTSCHRIFT

(11) **EP 2 483 333 B1**
(45) Veröffentlichungstag und Bekanntmachung des Hinweises auf die Patenterteilung: **05.08.2015**
(21) Anmeldenummer: 10765367.7
(22) Anmeldetag: 14.09.2010
(51) Int. Cl.: C08J 5/00

(54) **FORMKÖRPER MIT MANTEL- UND TRÄGERMATERIAL SOWIE VERFAHREN ZU DESSEN HERSTELLUNG**
MOULDED BODY HAVING CLADDING MATERIAL AND CARRIER MATERIAL AND METHOD FOR THE PRODUCTION THEREOF
CORPS MOULÉ AVEC MATÉRIAU D'ENVELOPPE ET DE SUPPORT AINSI QUE SON PROCÉDÉ DE FABRICATION

(30) Priorität: 30.09.2009 DE 102009043463
(43) Veröffentlichungstag der Anmeldung: 08.08.2012
(73) Patentinhaber: THÜRINGISCHES INSTITUT FÜR TEXTIL- UND KUNSTSTOFF-FORSCHUNG e.V., 07407 Rudolstadt (DE)
(72) Erfinder: MELLE, Jürgen, 07407 Rudolstadt (DE); BAUER, Ralf-Uwe, 07407 Rudolstadt (DE); NIEMZ, Frank-Günther, 07407 Rudolstadt (DE); RIEDE, Sabine, 07407 Uhlstädt-Kirchhasel (DE)
(74) Vertreter: Plate, Jürgen
(86) Internationale Anmeldenummer: PCT/EP2010/005621
(87) Internationale Veröffentlichungsnummer: WO 2011/038834

(56) Entgegenhaltungen:
- WO-A1-98/49223
- WO-A1-2006/131285
- DE-A1-102004 045 063

## Beschreibung

Die Erfindung betrifft einen Formkörper mit einem Träger- und mindestens einem polymerhaltigen Mantelmaterial, insbesondere Fasern oder Filamente, beispielsweise für Bürsten oder Borsten. Sie betrifft ferner ein Verfahren zur Herstellung des Formkörpers bei dem ein Trägermaterial beschichtet wird.

Die Herstellung von polymerhaltigen Schichten, beispielsweise aus Cellulose, auf unterschiedlichen Trägermaterialien ist an sich bekannt. Basierend auf den ersten Verfahren zur Herstellung verformbarer cellulosischer Polymermassen wurde vorgeschlagen, Umhüllungen aus Cellulose auf unterschiedlichen Formkörpern zu generieren.

So wurde in DE 524929 vorgeschlagen, durch das Imprägnieren von Fäden unterschiedlichen Ursprunges mit Viskoselösungen und anschließender Regenerierung der Cellulose Schnüre herzustellen. Die regenerierte Cellulose dient dabei als Binder zwischen den einzelnen Fäden sowie zur Schaffung einer glatten Außenfläche der Schnüre, welche somit verbesserte Verarbeitungseigenschaften aufweisen.

Die Herstellung besonders reißfester Kunstfäden wird in der DE 557554 vorgeschlagen. Ein Seelenfaden hoher Reißfestigkeit wird mit einer Schicht von Cellulose ummantelt, welche aus Viskose, Cellulose/Kupferoxidammoniak-Lösung oder Acetatspinnlösung gebildet werden kann.

In keinem der oben genannten Verfahren wird auf die Verwendung von Celluloselösungen, hergestellt in einem Direktlöseverfahren eingegangen, keines dieser Verfahren nutzt das Relaxationsverhalten solcher Lösungen zur Herstellung besonders fester, gleichmäßiger und einstellbarer Beschichtungen aus, in die ein besonders hoher Anteil an Zusatzstoffen integriert sein kann.

In der GB 559943 wird unter anderem die Verwendung von Cellulosederivaten in gelöster Form als Kleber vorgeschlagen, um Schleifpartikel auf Papierunterlagen zu fixieren, wobei die Beschichtung in 3 aufeinanderfolgenden Arbeitsschritten erfolgt - zuerst wird als Kleber eine Cellulosederivatschicht aufgetragen, darauf werden die Schleifpartikel verteilt und mit einer abschließenden Cellulosederivatschicht verfestigt. Es sind also 3 Prozessstufen notwendig, um diese Schicht aus abrasiven Partikeln auf der Oberfläche eines Trägers zu verankern.

In der WO 2006/131285 A1 ist ein Verfahren zur Herstellung von Formkörpern auf Basis von Kollagen offenbart. Dabei werden Kollagen-Fibrillen homogen in einem gegebenenfalls wasserhaltigen Aminoxid gelöst, die Lösung wird extrudiert und zu einer Vorfolie geformt. Die Vorfolie wird dann mit einem wäßrigen Fällbad behandelt, in dem die Kollagen-Polypeptide ausgefällt werden. Die auf diese Weise hergestellten Formkörper eignen sich als chirurgisches Nahtmaterial, zur Wundabdeckung sowie als eßbare Nahrungsmittelhülle, insbesondere als eßbare künstliche Wursthülle. Beschichtungsverfahren oder beschichtete Formkörper sind nicht erwähnt.

Gegenstand der DE 10 2004 045 063 A1 ist eine Polymerzusammensetzung, die ein biologisch abbaubares Polymer, wie Cellulose oder Eiweiß, und ein Material aus Getreide oder Pseudogetreide, wie Mais, Reis, Weizen, Dinkel, Gerste, Hirse, Hafer, Roggen oder Buchweizen, umfaßt. Aus der Polymerzusammensetzung werden Formkörper, insbesondere Fasern, hergestellt. Bei Verwendung von Cellulose als biologisch abbaubarem Polymer kann dazu das Lyocell-, das Viskose- oder das Carbamat-Verfahren eingesetzt werden. Im Lyocell-Verfahren wird die Cellulose in wasserhaltigem N-Methyl-morpholin-N-oxid gelöst, gegebenenfalls werden der Lösung Additive hinzugefügt. Zu der Lösung wird das Getreide- oder Pseudogetreidematerial in Form von Pulver, Pulversuspension oder in flüssiger Form zugegeben. Die Mischung wird dann extrudiert. Verfahren zum Beschichten von Formkörpern sind nicht in Erwägung gezogen.

Die WO 98/49223 betrifft ein Verfahren zur Herstellung cellulosischer Flachfolien und cellulosischer Membranen, wobei eine Lösung von Cellulose in einem wäßrigen tertiären Aminoxid zu einer Folie extrudiert, die dann über einen Luftspalt in ein Fällbad geführt wird. Beschichtungsverfahren oder beschichtete Formkörper sind auch hier nicht erwähnt.

Die Erzeugung von Celluloseschwammtüchern mit Innenverstärkung in Form von Fasern oder Fasernetzen wird in WO 99/27835 referiert. Zur Herstellung der verformbaren Celluloselösung wird das Lyocell-Verfahren vorgeschlagen. Die Herstellung gleichmäßiger funktioneller Schichten definierter Schichtdicke ist aus diesem Verfahren nicht ableitbar, da die Celluloselösung entweder auf einem Transportband oder einem Kunststoffnetz ausgestrichen wird, was einen wesentlichen Unterschied zu dem nachfolgend vorgeschlagenen Verfahren darstellt. Die bekannten Verfahren dienen vorwiegend dazu, dünne Schichten oder dünne Filamente aus verformbaren Polymeren herzustellen. Diese sind nur bedingt oder gar nicht geeignet, als Trägermaterial für Zusatzstoffe zu dienen, wie sie beispielsweise für technische Spezialanwendungen oder für Schleif-, Reinigungs- oder Pflegezwecke notwendig sind. In Abhängigkeit von Anteil und Partikelgröße der enthaltenen Additive sowie in Abhängigkeit vom Filamentdurchmesser wird das Polymernetzwerk des formbildenden Polymers zunehmend gestört, woraus ein Abfall beispielsweise der textil-physikalischen Eigenschaften von Fasern und Filamenten resultiert bzw. ein Verspinnen dieser Lösungen nicht möglich ist. Der Anteil und die Partikelgröße der enthaltenen Additive können außerdem einen Einfluß auf die Maschinenkomponenten haben, beispielsweise zu einem Abrieb an den Ventilen und Pumpenbauteilen führen.

Es ist daher eine Aufgabe der Erfindung, die Nachteile des Bekannten zu vermeiden und ein Verfahren zur Herstellung von Formkörpern mit polymerer Beschichtung zur Verfügung zu stellen. Es bestand das Ziel, ein Produkt bereitzustellen, bei dem der Durchmesser und/oder die Schichtdicke des Formkörpers gleichmäßig und wählbar sind, und bei dem die Polymerschichten zur Aufnahme von ausgewählten Zusatzstoffen geeignet sind. Der Formkörper soll auch mit größeren Anteilen funktioneller Additive verstärkende Eigenschaften, insbesondere eine hohe Festigkeit, aufweisen. Die Form des Trägermaterials soll variabel und/oder die Schichtdicken der Beschichtung gleichmäßig und wählbar sein, wobei die Beschichtung geeignet ist, funktionelle Zusatzstoffe, auch in großen Mengen, fest zu verankern. Gleichzeitig muss das Verfahren eine schonende Verarbeitung des Mantelmaterials unter der Wirkung nur sehr geringer Scherkräfte gewährleisten, wenn es sich um sensible Zusatzstoffe handelt, die leicht selbst zerstört werden können, wie im Falle der Einarbeitung von mit Flüssigwirkstoff beladenen Kapseln oder bei Zusatzstoffen, die eine schädigende Wirkung auf die Polymerlösung ausüben können, wie es bei Leitruß oder Aktivkohle der Fall ist. Durch die Beschichtung sollen die Eigenschaften des Trägermaterials nicht beeinträchtigt werden. Zwischen Trägermaterial und Beschichtung soll eine Verbindung mit hoher Festigkeit entstehen. Insbesondere soll dieses Verfahren ermöglichen, Beschichtungen mit fest verankerten abrasiven Partikeln, auch größeren Partikeldurchmessers, herzustellen.

Gelöst wurde die Aufgabe durch ein Verfahren zur Herstellung eines Formkörpers mit polymerer Beschichtung, umfassend die Schritte
a) Lösen von Polymeren in einem Lösungsmittel im Direktlöseverfahren zu einer Polymerlösung, aus der die polymere Beschichtung (Mantel) hergestellt wird,
b) Ausbilden einer vorläufigen Schicht auf dem Formkörper (Träger) in einem Beschichtungsraum durch Zwangsbenetzung in einem variierbaren Druck- und Strömungsgleichgewicht mit der Polymerlösung, die durch einen vordefinierten Spalt mit definiertem Druck in den Beschichtungsraum geführt wird,
c) Führen des Formkörpers mit der anhaftenden vorläufigen Schicht durch einen Spalt und durch eine Entspannungsstrecke definierter Länge, in der sich die Polymere in der vorläufigen Schicht ausrichten und viskoelastisch entspannen und sich eine endgültige, spannungsarme Polymerlösungsschicht ausbildet, wobei sich durch Einstellen der Geschwindigkeit des Formkörpers, von Druck und Viskosität der Polymeriösung, Größe des Spaltes durch den Polymerlösung auf den Formkörper (Träger) trifft, Größe des Spaltes durch den der Formkörper gemeinsam mit der anhaftenden Polymerlösungsschicht den Beschichtungsraum verläßt und die Länge der Entspannungsstrecke eine definierte Schicht ausbildet, und
d) Entfernen des Lösungsmittels aus der Polymerlösungsschicht.

In dem erfindungsgemäßen Verfahren zur Herstellung eines Formkörpers wird ein Beschichtungs- oder Mantelmaterial aus einer Polymerlösung durch Lösen von Polymeren in einem Lösungsmittel im Direktlöseverfahren hergestellt und in einen Vorratsbehälter geführt. Ein Trägermaterial wird mit definierter Geschwindigkeit durch einen Zufuhrkanal und durch eine Öffnung in einen Beschichtungsraum geführt, wobei der Zufuhrkanal den das Mantelmaterial enthaltenden Behälter durchquert. Gleichzeitig wird das Mantelmaterial durch einen vordefinierten Spalt und mit definiertem Druck in den Beschichtungsraum geführt, wo es zu einem ersten Kontakt zwischen Mantelmaterial und Trägermaterial kommt und nachfolgend das Trägermaterial gemeinsam mit dem anhaftenden Mantelmaterial durch eine weitere Austrittsöffnung geführt wird und eine Entspannungsstrecke definierter, insbesondere variierbarer, Länge durchläuft. Durch Einstellung der Geschwindigkeit des Trägermaterials, von Druck und Viskosität des Mantelmaterials, Größe des Spaltes durch den das Mantelmaterial auf den Träger trifft, Größe des Spaltes durch den das Trägermaterial gemeinsam mit dem anhaftenden Mantelmaterial den Beschichtungsraum verlässt und die Länge der Entspannungsstrecke kommt es zur Ausbildung einer definierten Schicht. Die Länge der Strecke wird derart gewählt, dass auf Grund des viskoelastischen Verhaltens der Polymerlösung eine Relaxation erfolgt, um nach der Entfernung des Lösungsmittels einen festen Verbund endgültiger Schichtdicke zum Trägermaterial zu bilden.

Zuletzt wird das Lösungsmittel aus der Polymerlösungsschicht entfernt.

Unter einem Direkt-Löseverfahren wird ein Löseverfahren verstanden, in dem das Polymer direkt und ohne chemische Derivatisierung oder Umwandlung in einem Lösungsmittel gelöst wird.

Unter dem Begriff Mantelmaterial wird in der vorliegenden Anmeldung Material verstanden, das als Beschichtung auf dem Trägermaterial angebracht ist oder wird. Die Beschichtung kann das Trägermaterial vollständig oder teilweise umhüllen und steht mit dem Trägermaterial in unmittelbarem Kontakt.

Bevorzugt wird in einem weiteren Schritt des Verfahrens die Länge der Entspannungsstrecke eingestellt. Sie beträgt insbesondere mindestens 0,5 cm. Die Länge der Strecke wird derart gewählt, dass sich die polymeren Bestandteile der Lösung aus Mantelmaterial relaxieren, das heißt, sich entlang des Trägermaterials spannungsfrei ausrichten, um nach dem Auslösen des Lösungsmittels einen festen endgültigen Verbund um das und mit dem Trägermaterial zu bilden.

Durch den Abzug des Trägermaterials aus dem Beschichtungsraum (19,19'), die anschließende Entspannungsstrecke(40) und die zumindest teilweise erfolgte Fällung der Mantelschicht-Polymeren wird das Verformungsvermögen, insbesondere der Verzug des polymeren Mantelmaterials zur Ausbildung der endgültigen Polymerlösungschicht realisiert.

Auf der Entspannungsstrecke herrschen bevorzugt normale Umgebungsbedingungen. Das beschichtete Trägermaterial durchläuft also eine unter Normaldruck stehenden Luftstrecke. Abweichend können die Umgebungsbedingungen auch so gestaltet werden durch Temperatur, Druck und atmosphärische Zusammensetzung, dass die Entspannung der Mantelschicht auf dem Trägermaterial begünstigt, insbesondere beschleunigt wird.

Alternativ kann ein Unterdruck ausgebildet sein oder der Formkörper mit einem bestimmten Gas angeblasen werden. Eine weitere Möglichkeit ist eine Klimatisierung der Entspannungsstrecke, zum Beispiel durch Einstellung einer Temperatur und/oder Feuchtigkeit.

In einer bevorzugten Ausführung des erfindungsgemäßen Verfahrens wird das Mantelmaterial im Behälter mit Druck beaufschlagt.

Die Aufgabe wird weiterhin gelöst durch ein Verfahren zur Herstellung eines Formkörpers, insbesondere wie oben beschrieben, wobei eine Polymerlösung, insbesondere eine Celluloselösung, unter gegenüber dem Umgebungsdruck erhöhtem Druck einer Austrittsöffnung zugeführt wird und dort in Umgebungsbedingungen entspannt wird.

Der Druck kann durch eine Dosierpumpe erzeugt werden. Bevorzugt wird allerdings ein Kolben oder Gasdruck verwendet. Dies ist insbesondere vorteilhaft, wenn das Ausgangsmaterial ein Funktionaladditiv, vor allem abrasive Stoffe, von größeren Durchmessern oder größerer Menge enthält. Derartige Zusatzstoffe könnten die Funktionsweise einer Dosierpumpe nachteilig beeinflussen.

Der Druck wird bevorzugt durch eine Beaufschlagung des Ausgangsmaterials mit einem Inertgas erzeugt, zum Beispiel Stickstoff. Stickstoff verhindert mögliche Abbaureaktionen bei thermischer Lagerung insbesondere bei Vorhandensein zusätzlicher Additive. Die beaufschlagte Gasatmosphäre sollte keine Feuchtigkeit enthalten, da diese den Lösezustand von zum Beispiel Celluloselösung beeinträchtigen würde.

Die Polymerlösung wird bevorzugt mit einem gegenüber dem Umgebungsdruck erhöhtem Druck zwischen 0,1 bar und 50 bar, bevorzugt zwischen 0,3 bar und 6 bar, beaufschlagt.

Der zu wählende Druck zur Beaufschlagung der Polymerlösung oder Spinnmasse ergibt sich aus der Zusammensetzung der Spinnmasse selbst und dem daraus resultierenden Fließverhalten und der am Ende gewünschten Dicke der Mantelschicht bei einer definierten Geschwindigkeit des Trägermaterials. Beispielsweise ist mit zunehmendem Polymergehalt der Lösung für einen gleichmäßigen Austrag der Lösung ein höherer Druck erforderlich. Gleiches gilt für steigende Abzugsgeschwindigkeiten. Die bevorzugten Druckbereiche betragen etwa 0,1 bar bis 10 bar. So eignen sich beispielsweise 0,3 bar für eine Beschichtungslösung mit einem Cellulosegehalt von 4 Gew.-% und 6 bar für einen Cellulosegehalt von 12 Gew.-% und Abzugsgeschwindigkeiten von bis zu 60 m/min.

Höherer Druck bis etwa 50 bar ermöglicht wesentlich höhere Abzugsgeschwindigkeiten.

Zur Erhaltung einer konstanten Qualität des Formteils oder der Beschichtung kann der Druck nachgeregelt werden. Damit ist auch bei abnehmender Masse in der Beschichtungsvorrichtung eine kontinuierliche Austrittsgeschwindigkeit gewährleistet.

In einer vorteilhaften Ausführung des erfindungsgemäßen Verfahrens wird ein, insbesondere filamentartiger, Kern aus einem Trägermaterial mit mindestens einem Mantelmaterial beschichtet.

Das Trägermaterial kann in einem weiteren Arbeitsschritt entfernt werden, um einen Hohlkörper zu schaffen.

In einer besonderen Ausführungsform enthalten/enthält das Trägermaterial und/oder mindestens ein Mantelmaterial vorwiegend (mehr als 50 Gew.-%) Cellulose.

Durch koaxiale, sowohl konzentrische als auch exzentrische, Schichtausbildung auf Trägermaterialien, insbesondere mit rundem Querschnitt, beispielsweise Mono- oder Multifilamenten und Garnen kann es gelingen, eine Schrumpfkräuselung auf diesen Formkörpern zu applizieren.

In einer bevorzugten Ausführungsform des erfindungsgemäßen Verfahrens wird ein Kern aus Trägermaterial kontinuierlich mit definierter Geschwindigkeit einem Beschichtungsraum zugeführt, wird dort mit einem Mantelmaterial, das unter einem gegenüber dem Umgebungsdruck erhöhten Druck steht und dessen Druck in Abhängigkeit von der Zusammensetzung und Viskosität des Mantelmaterials eingestellt wird, in Kontakt gebracht und anschließend durch eine Austrittsöffnung einstellbarer Größe geführt und in Umgebungsbedingungen entspannt.

Auf diese Weise werden Mantelschichten konstanter Dicke und Qualität erzeugt. Die Dicke der Mantelschicht kann in einem weiten Bereich variieren. Sie wird eingestellt in Abhängigkeit vom Verwendungszweck der beschichteten Formkörper und wird beeinflusst durch die Zusammensetzung der Mantellösung, insbesondere die Größe der Zusatzstoffe. Allgemein beträgt die Dicke 200 Nanometer bis 5,0 Millimeter. Bevorzugte Bereiche in Abhängigkeit vom Verwendungszweck liegen zwischen 1 bis 800 µm, besonders bevorzugt 5 bis 600 µm, insbesondere 10 bis 500 µm, ganz speziell 20 bis 400 µm.

Die Phasengrenze zwischen Kern- und Mantelmaterial ist, bedingt durch das Beschichtungsverfahren, besonders scharf ausgeprägt. Die erfindungsgemäßen Formkörper lassen sich u.a. dadurch von coextrudierten Formkörpern unterscheiden, bei denen auch das Kernmaterial in Form einer Lösung extrudiert wird.

Zur Herstellung der Polymerlösung können direkt lösliche natürliche, synthetische oder biotechnologisch hergestellte Polymere verwendet werden. Direkt lösliche Polymere sind Polymere, die ohne chemische Derivatisierung direkt in Lösung gehen können.

Geeignete Polymere sind z.B. natürliche Polymere wie Polysaccharide, z.B. Cellulose, Chitosan, Stärke; synthetische Polymere wie Polyacrylsäure, Polyacrylamid, Polyvinylalkohol, Polyacrylnitril, Polystyrole, Polymethylmethacrylat, Polyester, Polyamide, Polyimide; oder Biopolymere wie Polylactide, Proteine wie Seide, Fibroine, biotechnologisch hergestellte Polyester oder Polyamide. Bevorzugt wird bei der Herstellung von dem Formkörper Cellulose-Lösung verwendet. Besonders bevorzugt wird die Celluloselösung im Direktlöseverfahren in N-Methyl-morpholin-N-Oxid oder in ionischen Flüssigkeiten ohne Derivatisierung gewonnen, also im sogenannten "Lyocell"-Verfahren. Mit Cellulose-Lösungen hergestellte Formkörper zeichnen sich durch eine besonders gute Haftung der Mantelschicht am Trägermaterial aus und/oder durch einen besonders hohen möglichen Gehalt an Zusatzstoffen.

Geeignete Lösungsmittel zur Lösung von Polymeren sind polare Lösungsmittel wie z.B. Wasser, Alkohol, Aceton, Acetonitril, Dimethylsulfoxid, Glyzerin, Salze wie LiCl, Natriumrhodanid (= Natriumthiocyanat), Säuren, wie z.B. Essigsäuren, Ammoniak, ionische Flüssigkeiten; organische Lösungsmittel wie Dimethylformamid, Dimethylacetamid, N-Methylpyrrolidon, unpolare Lösungsmittel, wie kurzkettige Kohlenwasserstoffe, z.B. Benzin, Ether. Geeignete tertiäre Aminoxide sind z.B. NMMNO, geeignete ionische Flüssigkeiten sind z.B. Alkylimidazolium-chloride oder -acetate oder -nitrate.

Durch die Zugabe von Additiven während des Löseprozesses kann die entstehende Polymerlösung so modifiziert werden, dass die Additive in homogener gleichmäßiger Verteilung in den Lösungszustand übertragen werden und im folgenden Formgebungs- und Fällungsprozess auf den Formkörper, insbesondere auf die Mantelschicht, übergehen.

In einer Ausführungsform des Verfahrens wird die Polymer- oder insbesondere Celluloselösung vor dem Formprozess gut mit dem Funktional-Additiv vermischt, beispielsweise verrührt, so dass eine homogene Verteilung des Funktional-Additivs sichergestellt ist.

Das Funktional-Additiv ist derart gewählt, dass es gezielt mindestens eine der folgenden Eigenschaften des Formkörpers beeinflusst: Zugfestigkeit, Biegefestigkeit, Steifheit, Verschleißfestigkeit, Abrasivität, Oberflächenrauhigkeit, Flüssigkeitsaufnahmevermögen, Reibungsverhalten, elektrische Leitfähigkeit; Geruch, Farbe, Flammschutz, Barrierebildung, Durchlässigkeit, insbesondere von Gasen und/oder Flüssigkeiten, und/oder Beständigkeit, insbesondere gegenüber äußeren Einflüssen bei bestimmten Anwendungen, wie zum Beispiel Wetterbeständigkeit, Beständigkeit gegenüber Strahlung, wie UV-Strahlung, chemische Beständigkeit, Beständigkeit gegenüber mechanischen Einwirkungen, Temperaturbeständigkeit, wie Beständigkeit gegen Hitze und Kälte, Feuerfestigkeit. Das Funktional-Additiv gehört bevorzugt zu der Gruppe der Stoffe, die für technische Spezialanwendungen, für Schleif-, Reinigungs- oder Pflegezwecke verwendet werden. Dazu gehören beispielsweise Schleifmittel oder Abrasiva, wie Karbide, Korunde, Metalloxide, Diamantpulver, Cubisches Bornitrid (CBN) oder Hartmetall. Zu den Funktionaladditiven gehören auch Fette, Öle, wie Paraffin, Duftstoffe, Mineralien, reibungsvermindernde Pigmente, wie Teflon, Molybdänsulfid oder Graphit, Farbpigmente, wie TiO₂, aber auch Ionentauscher, Absorber (wie beispielsweise Bentonite oder modifizierte Bentonite, Aktivkohle, Zeolithe), reines Silber, Superabsorber, PCM (Phase-Change-Materials), hydrophobe/hydrophile Modifikatoren, Insekt-Repellents, UV-Absorber, thermochrome/elektrochrome Substanzen, grenzflächenaktive Stoffe, Dispersionsmittel, Porenbildner, Schaumbildungshemmer (zum Beispiel silikonhaltige Verbindungen und fluorhaltige Verbindungen), Antioxidantien (zum Beispiel sterisch gehinderte Phenole und Phosphite), thermische Stabilisatoren (zum Beispiel Phosphite, organische Phosphorverbindungen, Metallsalze von organischen Carbonsäuren und Phenolverbindungen), Licht- oder UV-Stabilisatoren (zum Beispiel sterisch gehinderte Hydroxybenzoate und sterisch gehinderte Amine), mikrowellenabsorbierende Zusätze (zum Beispiel multifunktionale Primäralkohole, Glyzerine und Kohlenstoff), Verstärkungsfasern (zum Beispiel Kohlenstofffasern, Aramidfasern und Glasfasern), leitende Fasern oder Partikel (zum Beispiel Graphit oder aktivierte Kohlenstofffasern oder -partikel, Leitruß oder Metalle), Schmiermittel, Verarbeitungshilfen (zum Beispiel Metallsalze von Fettsäuren, Fettsäureester, Fettsäureether, Fettsäureamide, Sulfonamide, Polysiloxane, organische Phosphorverbindungen, siliziumhaltige Verbindungen, fluorhaltige Verbindungen und Phenolpolyether), Flammschutzmittel (zum Beispiel halogenisierte Verbindungen, Phosphorverbindungen, organische Phosphate, organische Bromide, Aluminiumoxidtrihydrat, Melaminderivate, Magnesiumhydroxid, Antimonverbindungen, Antimonoxid und Borverbindungen), Antiblockzusätze (zum Beispiel Kieselerde, Talk, Zeolithe, Metallcarbonate und organische Polymere), Anti-Nebelzusätze (zum Beispiel nichtionogene grenzflächenaktive Stoffe, wie Glyzerinester, Polyglyzerinester, Sorbitanester und ihre Ethoxylate, Nonylphenylethoxylate und Alkoholethoxylate), Antistatikzusätze (zum Beispiel nichtionogene Antistatika, beispielsweise Fettsäureester, ethoxylierte Alkylamine, Diethanolamide und ethoxylierter Alkohol; anionische Antistatika, beispielsweise Alkylsulfonate und Alkylphosphate; kationische Antistatika, beispielsweise Metallsalze von Chloriden, Methosulfaten oder Nitraten, und quarternäre Ammoniumverbindungen; und amphotere wie zum Beispiel Alkylbetaine), Anti-Mikrobenstoffe (zum Beispiel Arsenverbindungen, Schwefel, Kupferverbindungen, Isothiazolin-Phthalamide, Karbamate, anorganische Mittel auf Silberbasis, Silber-Zinkzeolithe, Silber-Kupferzeolithe, Silberzeolithe, Metalloxide und Silikate), Kreuzverknüpfungselemente oder Mittel für kontrollierten Abbau (zum Beispiel Peroxide, Azoverbindungen, Silane, Isocyanate und Epoxidharze), Farbstoffe, Pigmente, Färbemittel, fluoreszierende Aufheller oder optische Aufheller (zum Beispiel Bis-Benzoxazole, Phenylcoumarine und Bis(styryl)biphenyle, Füllstoffe (zum Beispiel natürliche Mineralien und Metalle wie zum Beispiel Oxide, Hydroxide, Carbonate, Sulfate und Silikate; Talk; Ton; Wollastonit; Graphit; Ruß; Kohlenstofffasern; Glasfasern und -perlen; Keramikfasern und -perlen; Metallfasern und -kugeln; Feinpulversorten; und Fasern natürlicher oder synthetischer Herkunft wie zum Beispiel Fasern aus Holz, Stärke oder Zellulosefeinpulverarten), Verbindungsmittel (zum Beispiel Silane, Titanate, Zirkonate, Fettsäuresalze, Anhydrite, Epoxidharze und ungesättigte Polymersäuren), Verstärkungsmittel, Kristallisations- oder Kristallisationskernbildungsmittel (zum Beispiel jeder beliebige Werkstoff, der die Kristallinität eines Polymers erhöht oder verbessert, wie zum Beispiel um die Rate oder Kinetik von Kristallwachstum, Anzahl gewachsener Kristalle oder Arten gewachsener Kristalle zu verbessern) usw.

Durch das Hinzufügen von Funktional-Additiven lassen sich Verbundwerkstoffe herstellen, die Eigenschaften bzw. Eigenschaftskombinationen aufweisen, welche mit herkömmlichen Verfahren der Beschichtung wie Aufsprühen, Kleben oder Tauchen nicht erreicht werden können. Außerdem sind auch "labile" Polymerlösungen mit sehr hohen Fremdstoffanteilen bis zu 95 Gew.%, bezogen auf das Polymer, oder mit Fremdstoffen mit größeren Partikelgrößen bis 3 mm verarbeitbar.

Das Funktionaladditiv ist bevorzugt ein Abrasiv-, Pflege- und/oder Duftmittel.

Das Funktional-Additiv, das insbesondere aus den oben erwähnten Gruppen ausgewählt ist, wird bevorzugt in Partikel- oder Tröpfchenform in einem polymerhaltigen Ausgangsmaterial dispergiert, wenn dieses noch in flüssiger, pastöser oder körniger Form vorliegt, bevorzugt, bevor es in den Lösezustand überführt wurde.

Die Tröpfchen- oder Teilchengröße des Funktionaladditivs beträgt allgemein 1 Nanometer bis 3 Millimeter. Als Größe wird hierbei ein größter Durchmesser des Teilchens oder Tröpfchens verstanden.

Die Tröpfchen- oder Teilchengröße der zugesetzten Funktionaladditive hängt von der Art der zugesetzten Additive und von dem vorgesehenen Verwendungszweck ab. Bei diesem Verfahren können bevorzugt abrasive, leitfähige, absorbierende Funktionaladditive bzw. Kapseln mit eingeschlossenen Wirkstoffen eingesetzt werden. Diese Additive können einzeln oder kombiniert eingesetzt werden oder auch zusammen mit weiteren funktionellen Zusätzen wie antibakteriellen, flammhemmenden, Duft- oder Farbstoffen eingesetzt werden.

Abrasive Funktionaladditive weisen vorzugsweise eine mittlere Größe von 1 µm bis 3 mm auf. Eingebettet sind sie vorzugsweise in eine Beschichtung mit einer Dicke zu 5 mm. Der Anteil der abrasiven Additive kann bis zu 95 Gew.-% betragen, bezogen auf das Gesamtgewicht der Beschichtung. Wird als abrasives Additiv Siliciumcarbid oder Korund gewählt, so beträgt deren mittlere Partikelgröße bevorzugt 1,2 µm bis 3 mm; der Anteil in der Beschichtung beträgt bevorzugt bis zu 35 Gew.-%, bezogen auf das Gesamtgewicht der Beschichtung. Kubisches Bornitrid (CBN) weist vorzugsweise eine mittlere Partikelgröße von 1 µm bis 1,0 mm auf, die Schichtdicke beträgt bevorzugt bis zu 3 mm, der CBN-Anteil an der Beschichtung beträgt bevorzugt bis zu 45 Gew.-%, bezogen auf das Gesamtgewicht der Beschichtung. Diamantpulver weist demgegenüber vorzugsweise eine mittlere Partikelgröße von 2,5 bis 90 µm, die Dicke der Beschichtung beträgt allgemein bis zu 1,5 mm, der Anteil der Diamantpartikel bis zu 50 Gew.-%, bezogen auf das Gesamtgewicht der Beschichtung.

Ist das Funktionaladditiv Leitruß, so beträgt die mittlere Partikelgröße bevorzugt 5 bis 50 nm, die Schichtdicke bevorzugt mindestens 200 nm und der Anteil an Leitruß bevorzugt bis zu 60 Gew.-%, bezogen auf das Gesamtgewicht der Beschichtung. Mikrokapseln, die beispielsweise mit Phasenwechselmaterialien (PCM),pharmazeutischen, Duft- oder Farbstoffen gefüllt sein können, haben bevorzugt eine mittlere Partikelgröße von 2 bis 90 µm, die Schichtdicke beträgt bevorzugt mindestens 5 µm, der Anteil der Mikrokapseln bevorzugt bis zu 60 Gew.-%, bezogen auf das Gesamtgewicht der Beschichtung.

Von den antibakteriellen Funktionaladditiven weist Nanosilber bevorzugt eine mittlere Partikelgröße von 20 nm oder mehr auf, die Dicke der Beschichtung beträgt mindestens 200 nm, der Anteil des Nanosilbers bis 1 Gew.-%, bezogen auf das Gesamtgewicht der Beschichtung. Zinkoxid als antibakterielles Additiv weist bevorzugt eine mittlere Partikelgröße von 2 bis 4 µm auf, die Schichtdicke beträgt bevorzugt 5 µm oder mehr, der Anteil des Zinkoxids an der Beschichtung beträgt bevorzugt bis zu 60 Gew.-%, bezogen auf das Gesamtgewicht der Beschichtung. Absorbierende Additive haben bevorzugt eine mittlere Partikelgröße von 5 µm bis 3 mm (Aktivkohle) oder von 8 µm bis 2 mm (superabsorbierende Polymere, SAP), die Schichtdicke beträgt bevorzugt mindestens 5 µm (Aktivkohle) bzw. bis zu 4 mm (SAP), dabei beträgt der Anteil der absorbierenden Additive bevorzugt bis zu 40 Gew.-%, bezogen auf das Gesamtgewicht der Beschichtung.

Werden Ionenaustauscher als Funktionaladditive eingesetzt, so beträgt deren mittlere Partikelgröße bevorzugt 5 µm bis 3 mm, die Dicke der Beschichtung bevorzugt mindestens 10 µm und der Anteil an Ionenaustauscher bevorzugt bis zu 50 Gew.-%, bezogen auf das Gesamtgewicht der Beschichtung. Vorteilhaft können auch keramische Partikel als Funktionaladditive mit Gewichtsanteilen bis zu 95% eingesetzt werden. In diesem Fall beträgt die Partikelgröße 1-5µm und man kann Schichtdicken ab 5 µm bis zu 5 mm erreichen. Nach Sinterung mit gleichzeitiger Entfernung des Trägerkörpers erhält man hohle Formkörper wie Hohlfasern, Hohldrähte oder Membranen, die für unterschiedliche technische Zwecke eingesetzt werden können.

Das erfindungsgemäße Verfahren eignet sich besonders zur Herstellung von Beschichtungen, die mit Flüssigkeit gefüllte Mikrokapseln enthalten, denn es treten dabei praktisch keine Scherkräfte auf. Da keine Spinnpumpen notwendig sind, können auch Beschichtungen mit abrasiv wirkenden Partikel hergestellt werden. Eine Abnutzung der Spinndüsen wird vermieden.

Für die Herstellung der Beschichtungen in dem erfindungsgemäßen Verfahren sind Lösungen von Cellulose in NMMO oder in ionischen Flüssigkeiten besonders geeignet. In diesen Lösungen bleibt die Struktur der Cellulose weitgehend erhalten, d.h. die Celluloseketten bleiben gerichtet (orientiert). Bei der Verformung ist daher kein Recken oder Verstrecken mehr notwendig, um die Moleküle im Formkörper zu orientieren. Darin wird auch die Ursache der besonders hohen mechanischen Festigkeit der mit diesen Lösungen hergestellten Formkörper erklärt. Selbst große Mengen an Zusatzstoffen werden lassen sich in der Cellulosematrix fest verankern, ohne dass sich die Gesamtfestigkeit entsprechend verringert. In dem fertigen Formkörper sind hohe Anteile an kristalliner Cellulose nachweisbar. Demgegenüber handelt es sich bei Celluloseacetat-, Cellulose/Kupferammonium- und Viskoselösungen um echte Lösungen, in denen die Kettenmoleküle untereinander nicht mehr gebunden sind. In dem fertigen Formkörper finden sich große amorphe Bereiche, die erst gereckt bzw. orientiert werden müssen, um eine höhere Festigkeit zu erreichen. Der Grad der Kristallinität der Cellulose lässt sich beispielsweise durch Röntgen-Diffraktometrie nachweisen, wie in den DIN EN 13925 -1 bis -3 "Zerstörungsfreie Prüfung - Röntgendiffraktometrie von polykristallinen und amorphen Materialien" beschrieben.

In einer vorteilhaften Ausführung der Erfindung wird der Behälter, der die Polymerlösung beinhaltet, temperiert d.h. in der Regel erwärmt.

In einer besonders vorteilhaften Ausführung des erfindungsgemäßen Verfahrens wird das Trägermaterial dem Beschichtungsraum durch einen in Austrittsrichtung des Kerns verschiebbaren Zufuhrkanal zugeführt, der den Behälterraum mit der Polymerlösung durchquert und der das Trägermaterial und das Mantelmaterial vor dem Beschichten voneinander trennt. Der Spalt zwischen Zufuhrkanal und Innenwand des Beschichtungsraums kann somit variiert werden. Die gezielte Einstellung der Spaltbreite ermöglicht die Herstellung einer Schicht mit konstanter Dicke.

Trägermaterial und Mantelmaterial treffen dabei an einem definierten Ort im Beschichtungsraum zusammen, der in Abhängigkeit von den jeweiligen Materialeigenschaften, z.B. den Lösungseigenschaften, der Viskosität oder dem Gehalt an Zusatzstoffen, gewählt werden kann. Bevorzugt sind der Zufuhrkanal und der Behälterraum koaxial in Bezug auf die Austrittsöffnungen angeordnet. Vorteilhafterweise wird vor dem Beschichten die Schichtdicke des Mantelmaterials eingestellt, insbesondere durch eine Positionierung des Zufuhrkanals in dem Behälterraum, durch eine Wahl des Öffnungsquerschnitts der Austrittsöffnung, durch eine Einstellung der Abzugsgeschwindigkeit des Trägermaterials, durch eine Einstellung der Austrittsgeschwindigkeit des Mantelmaterials in den Beschichtungsraum und/oder durch die Wahl der Zusammensetzung der Polymerlösung, welche das Fliessverhalten und das Rückverformungsvermögen der Polymerlösung in der Entspannungszone bestimmt, und durch die Form und Größe der Austrittsöffnung aus dem Beschichtungsraum.

Neben der Viskosität der Beschichtungslösung und dem beaufschlagten Druck bestimmen die Öffnungsquerschnitte und die Position des Zufuhrkanals die Ausflußmenge und die Abzugsgeschwindigkeit die Kontaktzeit im Beschichtungsraum unter Prozessbedingungen.

In dem Beschichtungsraum treten gegenüber der anschließenden Entspannungsstrecke ein anderer Druck und/oder andere Strömungsgeschwindigkeiten für das Mantelmaterial, das Trägermaterial und/oder beides auf.

Gemäß einer weiteren Ausführungsform des Verfahrens kann das Trägermaterial vorbehandelt werden, bevor es den Zufuhrkanal erreicht oder das Trägermaterial kann in dem Zufuhrkanal vorbehandelt werden.

Ein zusätzliches Funktionaladditiv kann auf dem Kern angeordnet sein und von dem Mantelmaterial geschützt und/oder gehalten werden.

Das Funktionaladditiv kann beispielsweise mit einem nicht permanenten Binder auf die Oberfläche des Trägermaterials gebracht und beim Beschichten vom Mantelmaterial bedeckt und verankert werden. Dieses Vorgehen bietet sich an, wenn die Additive gegenüber den Prozessbedingungen, insbesondere dem Prozesslösungsmittel, nicht verträglich sind. In diesem Fall kann ein beliebiges Trägermaterial mit nichtpermanenten Bindersystemen zur Aufnahme beispielsweise prozess-sensibler Additive imprägniert werden, die nachfolgend durch den zusätzlichen Aufbau einer beispielsweise permanenten Cellulosehülle stabilisiert werden. Die Additive werden im Verbund verankert, wobei eine geringe Kontaktzeit vorliegt.

Auf das Trägermaterial kann beispielsweise auch ein schersensitiver Zusatz aufgebracht werden. Das beanspruchte Verfahren erlaubt eine weitere Beschichtung des Trägermaterials ohne größere Scherkräfte. Der schersensitive Zusatz wird also während des Beschichtungsvorgangs nicht beansprucht. Wird der fertige Formkörper einer Scherkraft ausgesetzt, so kann der schersensitive Zusatz seine Wirkung entfalten, beispielsweise Farbpartikel absondern.

In einer vorteilhaften Ausführung der Erfindung wird bei Verwendung eines flächigen Trägermaterials die Schichtdicke des Mantelmaterials auf Ober- und Unterseite des flächigen Materials unterschiedlich ausgebildet.

In einer vorteilhaften Ausführung des erfindungsgemäßen Verfahrens wird bei Verwendung von flächigen und durchlässigen Trägermaterialien in einem Teilbereich des Beschichtungsraums ein Unterdruck erzeugt, wodurch das Mantelmaterial in das Trägermaterial diffundiert.

In einer vorteilhaften Ausführung des erfindungsgemäßen Verfahrens wird ein beschichtetes Trägermaterial anschließend mit einer weiteren Schicht versehen.

Dabei kann es insbesondere unmittelbar nachfolgend einem weiteren Beschichtungsraum zugeführt werden und dort mit einem weiteren unter erhöhtem Druck zugeführten Mantelmaterial beschichtet werden.

Es kann auch nachfolgend einem Tauchbad zugeführt und dort mit einer weiteren Schicht versehen werden. Oder der Formkörper mit Beschichtung wird nachfolgend als Kern erneut einem Verfahren gemäß einem Verfahren wie oben beschrieben unterzogen.

Bei der weiteren Beschichtung kann es sich um eine Mantelschicht einer gleichen oder unterschiedlichen Polymerlösung, beispielsweise ebenfalls um eine Celluloseschicht, handeln, welche eine Schutzschicht für die Funktional-Additiv enthaltende Mantelschicht bildet und/oder zur Glättung der Oberfläche dient.

Der Formkörper kann insbesondere durch ein Tauchbad mit Glycerin oder einem anderen Weichmacher geführt werden. Der Weichmacher durchdringt das Cellulosematerial, so dass der Formkörper einen Weichmacher-Anteil von bis zu 30% erhält. Dieser sorgt für eine gewisse Feuchte und damit für Geschmeidigkeit und Biegsamkeit des Materials.

Alternativ kann der Formkörper durch weitere Tauchbäder geführt werden, in denen zum Beispiel die Oberfläche des Formkörpers aufgeraut wird. Diese Formkörper sind in der Lage, Flüssigkeiten, z.B. Öle, an der Oberfläche zu binden und von dieser abzugeben.

Der beschichte Formkörper kann in weiteren Schritten gemäß dem Fachmann bekannten Verfahren behandelt werden, zum Beispiel durch ein Fällbad geführt, temperiert, gekräuselt und/oder gestreckt werden.

Gemäß einigen Ausführungsformen der Erfindung können bestimmte Behandlungen oder Überzüge auf einen polymeren Formkörper aufgebracht werden, um zusätzliche Eigenschaften wie zum Beispiel Fleckenbeständigkeit, Wasserabweisung, weicheres Anfühlen und Feuchtigkeitsverwaltungseigenschaften zu übertragen. Beispiele von Behandlungen und Überzügen umfassen ®Epic (erhältlich von Nextec Applications Inc., Vista, Kalifornien), ®Intera (erhältlich von Intera Technologies, Inc., Chattanooga, Tennessee)und ®Zonyl Fabric Protectors (erhältlich von DuPont Inc., Wilmington, Delaware), ®Scotchgard.

Das Trägermaterial kann kontinuierlich oder chargenweise im Batch-Betrieb beschichtet werden.

Da der Beschichtungsprozess möglichst nicht unterbrochen werden sollte, ist es günstig, nacheinander Formkörper-Zwischenprodukte bestimmter Länge zu formen. Das Beschichtungsprodukt wird dazu jeweils auf Spindeln gebracht. Diese werden in einem anschließenden Schritt parallel zueinander abgewickelt, so dass die Formteile jeweils gleichzeitig mit gegenüber der Abzugsgeschwindigkeit reduzierter Durchlaufgeschwindigkeit die Waschstrecke durchlaufen.

Die Aufgabe wird außerdem gelöst durch ein Verfahren zur Herstellung von Borsten, wobei mit Verfahrensschritten zur Herstellung eines Formkörpers, wie oben beschrieben, Filamente hergestellt werden, die in weiteren dem Fachmann an sich bekannten Schritten zu Borsten verarbeitet werden, welche zu Bürsten und Pinseln verarbeitet werden können. Neben der weiteren Verwendung als Borsten in Bürsten und Pinseln sind viele weitere Anwendungsgebiete je nach verwendetem Funktionaladditiv denkbar. Zum Beispiel können nach diesem Verfahren hergestellte Fasern oder Filamente allein oder mit anderen Fasern oder Filamenten gemischt zu textilen Flächengebilden verarbeitet werden.

Eine zum Herstellen des erfindungsgemäßen Formkörpers geeignete Vorrichtung umfasst einen Behälterraum für Mantelmaterial, der mit Druck beaufschlagbar ist, einen Beschichtungsraum mit mindestens je einer variierbaren Zuführungsöffnung für das Trägermaterial und das Mantelmaterial sowie mindestens eine Austrittsöffnung zur Abgabe von beschichtetem Trägermaterial aufweist. Innerhalb des Behälterraumes ist ein Zufuhrkanal zum Zuführen von Trägermaterial in den damit begrenzten Beschichtungsraum angeordnet. Der Zuführungskanal für das Trägermaterial ist in seiner Position verstellbar und so gestaltet, dass er den Behälterraum für Mantelmaterial zum Beschichtungsraum verschließen, insbesondere aber die Zuführungsöffnung für das Mantelmaterial in den Beschichtungsraum variieren kann.

In einer vorteilhaften Ausführungsform ist der Zufuhrkanal innerhalb des Behälterraumes bewegbar, wodurch insbesondere ein Ringspalt oder Schlitzspalt zwischen Zufuhrkanal und Innenwand des Behälterraums einstellbar ist.

Vorteilhafterweise sind der Behälter- und der Beschichtungsraum durch den Zufuhrkanal (14; 14') in separate Teilbereiche unterteilbar oder unterteilt, insbesondere derart, dass über die separaten Teilbereiche dem Trägermaterial unterschiedliche Arten und/oder Mengen von Mantelmaterialien zuführbar sind.

In einer vorteilhaften Ausführung der Erfindung ist mindestens in einem Teilbereich ein Unterdruck erzeugbar.

In einer weiteren vorteilhaften Ausführung der erfindungsgemäßen Vorrichtung ist die Spaltöffnung für den Austritt des Mantelmaterials in den Beschichtungsraum für jeden Teilbereich einstellbar.

Vorteilhafterweise ist der Zufuhrkanal derart ausgestaltet, dass er für eine Vorbehandlung des Trägermaterials geeignet ist, insbesondere zur Auftragung von Teilchen oder Flüssigkeiten.

Teil der Erfindung ist weiterhin ein Formkörper, bestehend aus mindestens einem Trägermaterial und mindestens einem Mantelmaterial, hergestellt durch ein Verfahren wie oben beschrieben. Die Schichtdicke des Mantelmaterials liegt dabei allgemein zwischen 200 Nanometern und 5 Millimetern.

Der Formkörper enthält bevorzugt mindestens ein Funktionsadditiv, insbesondere feste Teilchen mit einer Größe von 1 Nanometer bis 3 mm, insbesondere mit einem Gewichtsanteil von bis zu 95% am Mantelmaterial.

Eine besonders bevorzugte Ausführungsform der Erfindung betrifft einen Formkörper, insbesondere ein Filament, insbesondere zur Fertigung von Borsten, der mindestens 5 Gew.%, insbesondere mindestens 10 Gew.%, bevorzugt mindestens 20 Gew.%, weiter bevorzugt mindestens 50 Gew.% Cellulose enthält, wobei der Formkörper mindestens ein Funktional-Additiv enthält, welches in den Celluloseformkörper eingelagert ist. Das Funktional-Additiv umfasst Feststoffpartikel, die im Ausgangsstoff des Formkörpers dispergiert wurden, und/oder eine Flüssigkeit, die im Ausgangsstoff des Formkörpers emulgiert wurde. Der Formkörper weist einen Durchmesser von mindestens 0,01 mm, bevorzugt zwischen 0,01 mm und 3 mm, weiter bevorzugt zwischen 0,1 mm und 1,0 mm, auf.

In einer Ausführungsform ist der Formkörper von zylindrischer Form, das heißt, er hat eine Oberfläche, die von parallelen Geraden begrenzt wird. Er ist bevorzugt rotationssymmetrisch ausgebildet. Die Querschnittsfläche kann jedoch auch andere Formen aufweisen, so dass er einen Mantel mit Kanten und/oder einen Mantel mit großer Oberfläche besitzt.

Der Formkörper besteht im Trockenzustand typischerweise mindestens zu 5% (Gewichtsanteil), bevorzugt mindestens 20%, besonders bevorzugt zu 50% bis 95%, aus Cellulose. Die Cellulose entstammt bevorzugt dem Lyocell-Verfahren, wurde also durch ein Direktlöseverfahren in N-Methyl-morpholin-N-Oxid oder in ionischen Flüssigkeiten ohne Derivatisierung gewonnen.

Der Formkörper enthält in einer besonderen Ausführungsform mindestens ein Funktional-Additiv. Der Formkörper kann bis zu einem Anteil von 95% Gewichtsprozent der Trockenmasse mit einem oder mehreren Funktional-Additiven beladen sein.

Das Funktional-Additiv ist in dem Polymer, also zum Beispiel in der Cellulose gebunden. Funktional-Additive, die in dem formbildenden Polymer eingelagert sind, können anders als Teilchen, die nur an der Oberfläche des Formkörpers angeordnet sind, gleichmäßig freigegeben bzw. zur Anwendung gelangen.

Außerdem bilden sie ein Funktional-Additiv-Reservoir über das ganze Volumen des Formkörpers. Die Funktionalität des Formkörpers, insbesondere wenn es sich um ein Borstenfilament handelt, bleibt somit auch bei oberflächlicher Abnutzung des Formkörpers erhalten.

Das Funktional-Additiv umfasst Feststoffpartikel, die im Ausgangsstoff des Formkörpers, also des Träger- und/oder Mantelmaterials, dispergiert wurden, und/oder eine Flüssigkeit, die im Ausgangsstoff des Formkörpers emulgiert wurde. Das Funktional-Additiv kann Nanopartikel aber auch gröbere Strukturen umfassen, der Durchmesser liegt etwa im Bereich von 1 nm bis 3 mm.

Das Funktional-Additiv wird bereits in der Polymerlösung, zum Beispiel Celluloselösung, fein verteilt. Die Partikel und/oder Tröpfchen haben zum Beispiel Durchmesser im nm- bis mm-Bereich. Bei einer gleichmäßigen Verteilung des Funktionaladditivs im Träger- und/oder Mantelmaterial kann eine hohe Beladung von solchen Additiven bei Erhalt einer ausreichenden Verformbarkeit realisiert werden.

Das Funktional-Additiv ist bevorzugt ein Zusatzstoff mit bestimmten funktionellen Eigenschaften, die sich auf den gesamten Formkörper übertragen. Dabei wird gezielt mindestens eine der folgenden Eigenschaften des Formkörpers beeinflusst: Zugfestigkeit, Biegefestigkeit, Steifheit, Verschleißfestigkeit, Abrasivität, Oberflächenrauhigkeit, Flüssigkeitsaufnahmevermögen, Reibungsverhalten, Geruch, Farbe, Wärmespeichervermögen, Leitfähigkeit und antimikrobielle Wirkung.

In einer bevorzugten Ausführung der Erfindung umfasst der Formkörper einen Kern aus einem Trägermaterial, welcher mit mindestens einem Mantelmaterial beschichtet ist. Das Trägermaterial und/oder mindestens ein Mantelmaterial enthalten/enthält dabei vorwiegend Cellulose. Bevorzugt enthält mindestens ein Mantelmaterial vorwiegend Cellulose oder das Trägermaterial und mindestens ein Mantelmaterial enthalten vorwiegend Cellulose.

Der Formkörper kann aus einem Kern mit einer Schicht aus Mantelmaterial bestehen, er kann aber auch mehrere Schichten aufweisen. Dabei können sich die Mantelmaterialien der jeweiligen Schichten unterscheiden und unterschiedliche Funktionen erfüllen. Beispielsweise kann die äußerste Schicht lediglich als Schutzschicht dienen, die sich schnell abnutzt, wenn der Formkörper in Gebrauch kommt, und die dann die darunter liegende Schicht freigibt.

Als Trägermaterial von polymerhaltigen, insbesondere cellulosehaltigen Schichten eignen sich Endlosfilamente aus Mono- oder Multifilament, aus Fasern hergestellte Garne, Zwirne, Metallfäden oder -drähte, Glasfasern, aber auch Flächen textil gefertigter Gewebe und Vliese, die einen synthetischen, metallurgischen, mineralischen oder natürlichen Ursprung haben.

Als Kern kann auch eine Hohlfaser vorgesehen sein. Oder es ergibt sich ein hohler Kern durch nachträgliche Entfernung des Trägermaterials aus dem Formkörper, zum Beispiel durch Pyrolyse oder auf chemischem Wege.

Teil der Erfindung ist auch die Verwendung von Formkörpern wie oben beschrieben zur Herstellung von Bürsten und/oder Pinseln, bzw. zum Polieren, Reinigen, Waschen, Aufrauen, Glätten, Andrücken, Abdichten und/oder Abstreifen von Oberflächen und/oder zum Abtragen und/oder Auftragen von Material auf Oberflächen.

Gegenstand der Erfindung sind weiterhin Borsten aus einem Formkörper wie oben beschrieben und Bürsten mit derartigen Borsten. Weitere Anwendungsgebiete sind die Herstellung von Flächengebilden wie Vliesstoffen, Membranen, Papieren, beschichteten Folien und von technischen Textilen.

Der Durchmesser des Trägermaterials und die Dicke des Mantels entsprechen sich bevorzugt in etwa oder sind zumindest von derselben Größenordnung.

Die Verbundformkörper gemäß der vorliegenden Erfindung eignen sich insbesondere für technische Textilien sowie als Einsatzwerkstoffe für spezielle technische Anwendungen.

Das verwendete Trägermaterial kann die physikalischen Eigenschaften des Formkörpers bzw. Filaments, wie die Stabilität, die Biegbarkeit, die Wärme- oder elektrische Leitfähigkeit maßgeblich beeinflussen. Das Trägermaterial kann die Zugfestigkeit des Filaments erhöhen, was vorteilhaft ist, wenn das hergestellte Filament zum Beispiel auf Zug verwendet werden soll.

In einer vorteilhaften Ausführung der Erfindung weist der Formkörper einen Glyceringehalt von 0,01-30 Gew.-%, bevorzugt von 1-10 Gew.-%, auf. Das Glycerin wirkt als zusätzlicher Weichmacher in der Mantelschicht und sorgt dafür, dass der Formkörper eine gewisse Feuchtigkeit beibehält. Auf diese Weise behält der Formkörper seine Geschmeidigkeit auch bei längeren Lagerzeiten. Alternativ können auch Polyethylenglykole verwendet werden.

Die Erfindung wird im Folgenden anhand von Zeichnungen und Beispielen erläutert. Es zeigen
Figuren 1 a-1 h schematische Schnittdarstellungen von erfindungsgemäßen Formkörpern mit unterschiedlichem Aufbau;
Figuren 2a-2l schematische Schnittdarstellungen von erfindungsgemäßen Formkörpern mit unterschiedlichen Schnittflächengeometrien;
Figur 3 eine schematische Darstellung einer für das erfindungsgemäße Verfahren geeigneten Vorrichtung,
Figur 4 eine weitere schematische Darstellung einer für das erfindungsgemäße Verfahren geeigneten Vorrichtung;
Figur 5 eine weitere schematische Darstellung einer für das erfindungsgemäße Verfahren geeigneten Vorrichtung;
Figuren 6a-6b schematische Schnittdarstellungen von erfindungsgemäßen Formkörpern mit unterschiedlichen Schnittflächengeometrien

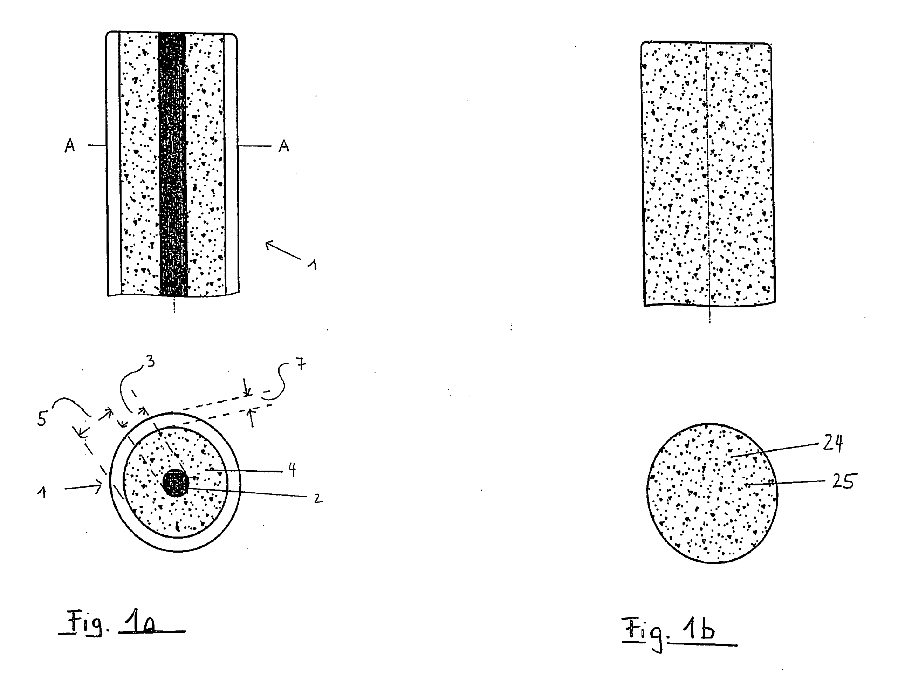

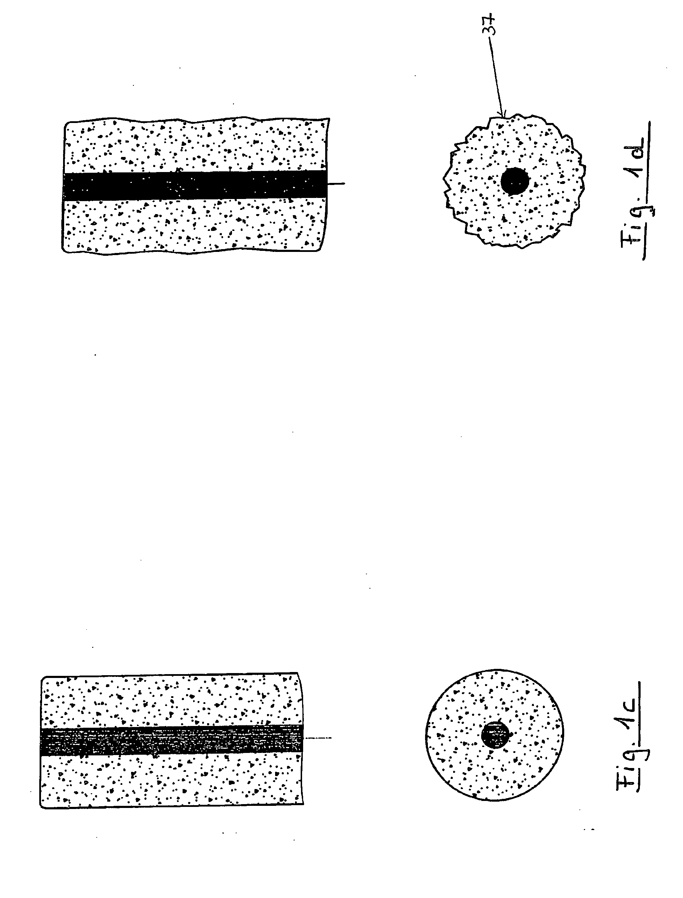

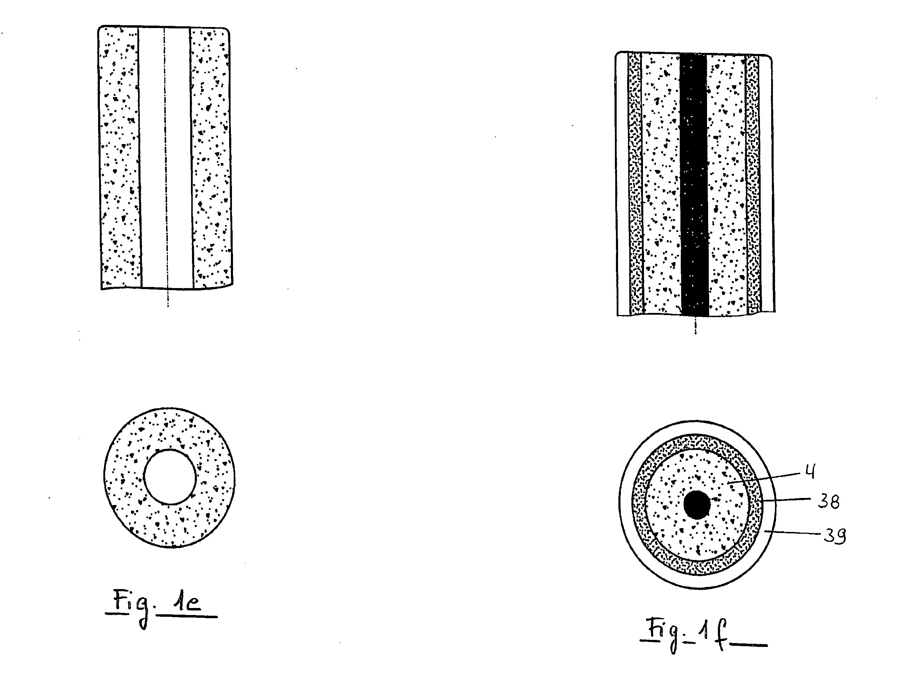

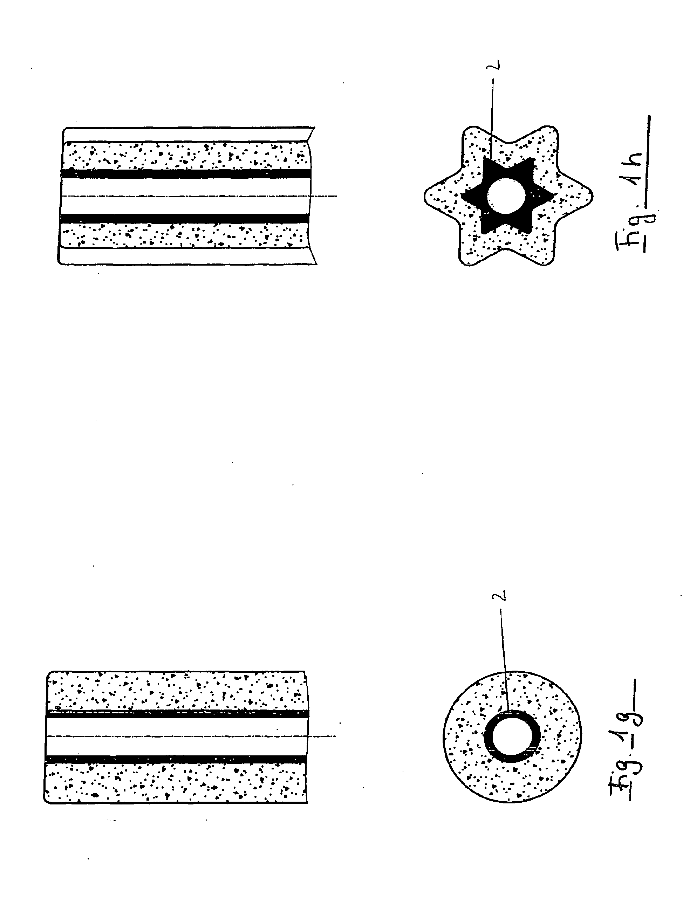

Figur 1 a zeigt schematische Schnittdarstellungen eines ersten Beispiels eines erfindungsgemäßen Formkörper. Die obere Abbildung zeigt einen Längsschnitt, die untere Abbildung einen Schnitt entlang der Schnittlinie AA. Der Formkörper 1 ist rotationssymmetrisch ausgebildet und hat einen ebenfalls rotationssymmetrisch ausgebildeten Kern aus Trägermaterial. Der Kern 2 hat typischerweise einen Durchmesser 3 von 0,15 mm.

Der Kern 2 ist mit einer Schicht 4 aus einem Mantelmaterial umhüllt. Diese enthält Funktional-Additiv. Die Schicht 4 hat typischerweise eine Dicke 5 zwischen 0,1 mm und 0,6 mm.

Der Formkörper 1 a enthält eine Abschlussschicht 7 aus reinem Polymer, welches aus Polymerlösung gebildet wurde. Diese Schicht hat typischerweise eine Dicke von etwa 0,01 mm bis 1,0 mm.
Figur 1b zeigt in analoger Weise Schnittbilder eines Monofilaments, bei dem in der Polymerlösung 24 ein Funktional-Additiv 25 eingelagert ist.
Figur 1c zeigt in analoger Weise Schnittbilder eines Formkörpers mit einem aus Trägermaterial gebildeten Kern 2 und einem Mantel 4.
Figur 1d zeigt in analoger Weise Schnittbilder eines Formkörpers wie in Figur 1c, welcher nachbehandelt wurde, wodurch dessen Oberfläche strukturiert wurde, so dass die Oberfläche 37 aufgeraut (strukturiert) ist.
Figur 1e zeigt in analoger Weise Schnittbilder eines Formkörpers wie in Figur 1c, welcher nachbehandelt wurde, wobei der aus Trägermaterial gebildete Kern entfernt wurde und ein Hohlkörper entstand.
Figur 1f zeigt in analoger Weise Schnittbilder eines Formkörpers mit mehreren Mantelschichten 4, 38, 39, die unterschiedliche Arten oder Mengen von Funktional-Additiven enthalten.
Figur 1g zeigt in analoger Weise Schnittbilder eines Formkörpers wobei als Trägermaterial 2 eine Hohlfaser verwendet wurde.
Figur 1h zeigt in analoger Weise Schnittbilder eines Formkörpers wobei ein Trägermaterial 2 mit strukturierter Schnittflächengeometrie verwendet wurde.

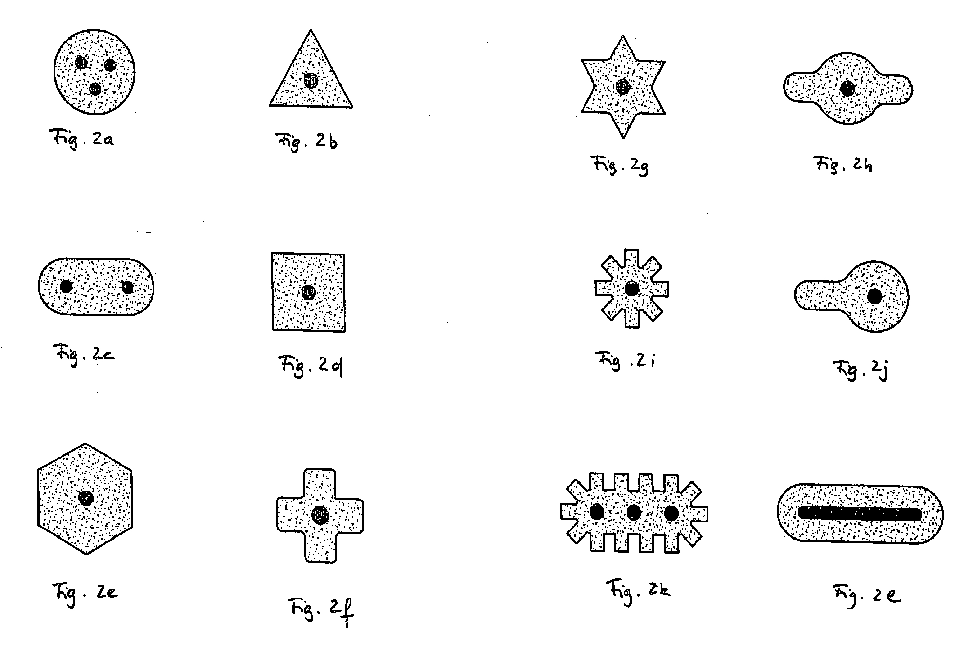

Figuren 2a bis 2l zeigen schematische Schnittdarstellungen von weiteren Beispielen für erfindungsgemäße Formkörper mit unterschiedlichen Schnittflächengeometrien und unterschiedlicher Anzahl von aus Trägermaterial gebildeten Kernen.
Formkörpern mit großer Oberfläche wie in den Figuren 1d oder 2f, 2g, 2i oder 2k sind beispielsweise in der Lage Flüssigkeiten, wie wässrige Medien oder Öle zu halten.

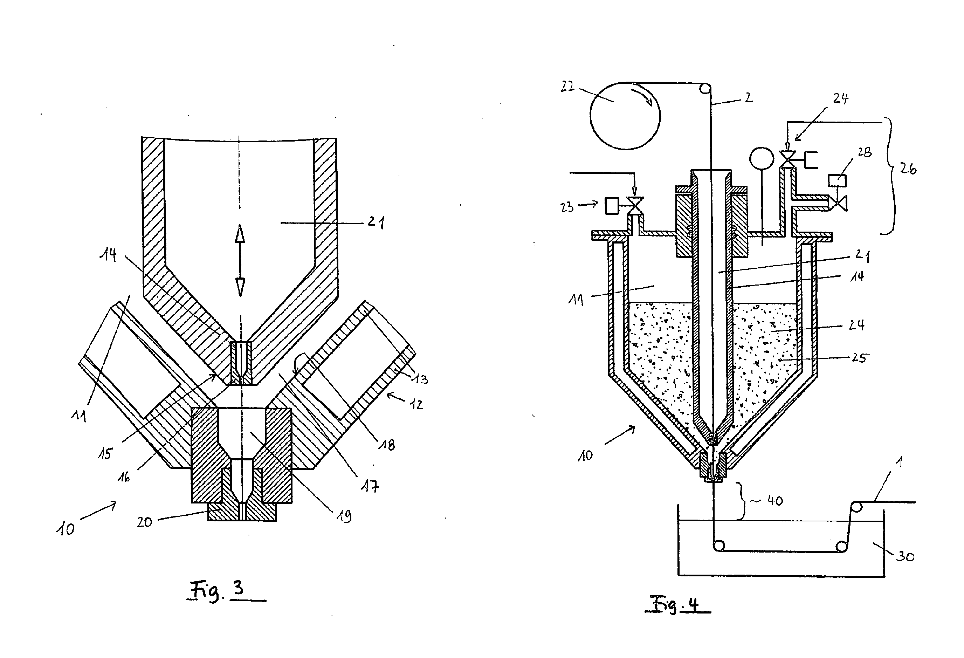

Figur 3 zeigt eine schematische Darstellung einer für das erfindungsgemäße Verfahren geeigneten Vorrichtung 10.

Das in der Abbildung nicht explizit gezeigte Mantelmaterial wird im Behälterraum 11 gespeichert, welcher zusätzlich in Gasatmosphäre unter Überdruck gehalten wird. Zur Temperierung der Lösung ist der Behälter 12 mit einem Doppelmantel 13 versehen. Zentrisch in dem Behälter 12 ist ein höhenverstellbarer Zufuhrkanal 14 angeordnet, welcher am unteren, sich konisch verjüngenden Ende 15 eine Austrittsöffnung 16, beispielsweise in Form einer austauschbaren Düsenbohrung 16, enthält. Die konusförmige Rohrverjüngung 15 ist so gestaltet, dass sie in vertikaler Richtung einen gleichförmigen Ringspalt 17 mit der inneren Behälterwandung 18 bildet. Dadurch bestehen die Möglichkeiten, einerseits durch den beaufschlagten Behälterdruck, zum anderen über den durch die Rohrstellung veränderlichen Spalt 17 die Austrittsmengen des Mantelmaterials in den Beschichtungsraum 19 und damit die aufgetragene Schichtdicke unter definierten Kontaktbedingungen zu regulieren. Durch den am Ende 15 atmosphärisch offenen Kanal 14 wird das in der Abbildung nicht explizit gezeigte Trägermaterial in der Form eines Filaments oder Garnes in vertikaler Richtung durch die Düse 16 geführt und gelangt in den Beschichtungsraum oder die Ummantelungszone 19.

Hier kommt es zum eigentlichen Kontakt zwischen Trägermaterial und Beschichtungslösung. Das beschichtete Trägermaterial wird schließlich über die Austrittsdüse 20 abgeführt.

Neben den zusätzlichen Möglichkeiten zur Einstellung der gewünschten resultierenden Schichtdicke über die Polymerlösungszusammensetzung, wie Polymer- und Additivgehalt, und der Geometrie der Austrittsdüse 20 kann durch die Abzugsgeschwindigkeit des Trägerfadens die Dicke der Mantelschicht maßgebend beeinflusst werden.

Der Spalt 17, die Abzugsgeschwindigkeit des Trägermaterials und der Druck in dem Beschichtungsraum 19 sind so gewählt, dass ein Gleichgewicht entsteht, bei dem keine Beschichtungslösung in den Kanalraum 21 eindringen kann und eine geschlossene Ummantelung des Trägermaterials erfolgt, die durch die weitere Austrittsdüse 20 aus dem Beschichtungsraum 19 dimensioniert werden kann.

Eine vertikale Anordnung wurde gewählt, um eine selbst zentrierende Positionierung des Trägerfadens in der Austrittsdüse 20 zu erhalten, aus welcher der beschichtete Träger über eine Entspannungsstrecke in ein nicht in der Abbildung gezeigtes Regenerierungsbad geführt wird.

Figur 4 zeigt eine weitere schematische Darstellung der erfindungsgemäßen Vorrichtung 10.

Ein Trägermaterial 2 wird von einer Rolle 22 in den Kanalraum 21 des höhenverstellbaren Zufuhrkanals 14 geführt.

Durch ein Ventil 23 kann eine Polymerlösung 24 in den Behälterraum 11 gefüllt werden. Die Polymerlösung 24, in welcher homogen mindestens ein Funktional-Additiv 25 verteilt ist, wird durch ein Druckmodul 26 mit einem Druck beaufschlagt. Das Druckmodul 26 umfasst eine Druckleitung 27, über welche ein Gas, beispielsweise Stickstoff, in den Behälterraum geleitet wird, ein Regelventil 28 und einen Druckmesser 29. Mit Hilfe des Regelventils 28 und des Druckmessers 29 kann ein bestimmter Druck oder Druckverlauf eingestellt und/oder nachgeregelt werden. Zudem kann eine kontinuierliche Nachspeisung von Polymerlösung unter konstantem Druck im Behälterraum 11 realisiert werden.

Das mit Polymerlösung 24 beschichtete Trägermaterial 2 wird über einen Entspannungsstrecke 40 in ein Regenerierbad geführt, wo begonnen wird, das Lösungsmittel aus der Polymerlösung 24 auszuwaschen.

Eine Umlenkung und Führung des beschichteten Trägermaterials 1 ist erst möglich, wenn eine ausreichend stabile Haut von regeneriertem Polymer an der Manteloberfläche gebildet wurde.

Es hat sich gezeigt, dass alternativ auch bei einer horizontalen oder aufwärts gerichteten Führung des beschichteten Trägermaterials mit realisierbaren dünneren Schichtdicken, die durch Besprühen oder Beträufeln mit Regeneriermedium verfestigt werden, bereits eine hinreichend stabile Polymerhaut gebildet werden kann, die eine weitere Führung des beschichteten Materials ohne Verkleben oder Beschädigung der Beschichtung ermöglicht. Jedoch ist sicher zu stellen, dass kein Regeneriermedium an die Austrittsöffnung des beschichteten Trägermaterials gelangt.

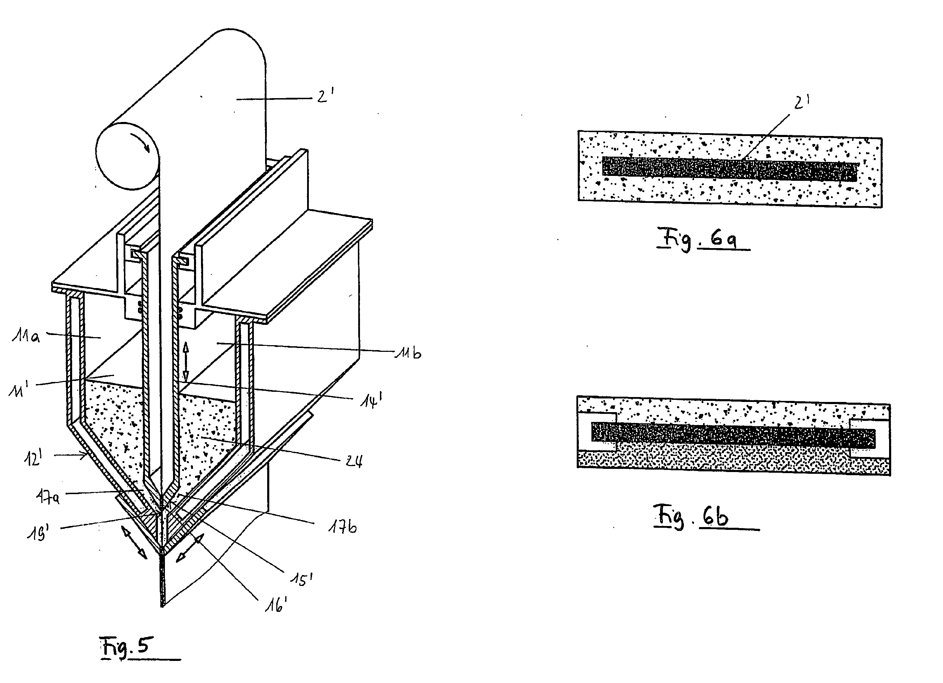

Bei Ausbildung des in der Abbildung 3 bezeichneten Zufuhrkanals 14 als Kanal mit rechteckigem Querschnitt und schlitzförmigen Austrittsöffnungen 16 und 20 können mit dieser Vorrichtung auch flächenförmige Gebilde in beschriebener Weise beschichtet werden, wie dies in Figur 5 gezeigt ist.

Das flächige Trägermaterial 2' wird über einen Kanal 14' zugeführt, welcher ebenfalls am unteren Ende 15' konisch verjüngt in einen Auslassschlitz 16' endet, durch welchen das Trägermaterial 2' in die Beschichtungszone 19' gelangt.

Der Kanal 14' bildet mit der Innenwand 18' des Behälters 12' beidseitig einen schlitzförmigen Spalt 17a, 17b.

Je nach Gestaltung des Behälters 12' zur Aufnahme der Beschichtungslösung 24 kann die Trägerfläche einseitig oder zweiseitig mit Polymerlösung beschichtet werden. Figur 6a zeigt schematisch das Schnittbild eines zweiseitig beschichteten Trägermaterials 2'.

Bei Unterteilung des Behälterraumes 11' durch den höhenverstellbaren Zufuhrkanal 14' selbst können gleichzeitig unterschiedliche Beschichtungen der Vor- und Rückseite des Trägermaterials 2' vorgenommen werden. Zudem ergibt sich die Möglichkeit, bei durchdringungsfähigen Materialien, wie textilen Flächen, durch Unterdruckbeaufschlagung eines abgetrennten Lösungsraumes in der Beschichtungszone eine regulierbare Druckdifferenz vor und hinter dem Trägermaterial 2' zu schaffen. Dadurch kann die Polymerlösung zielgerichtet in und durch das Gewebe dringen, was für eine optimale Verbindung der Materialien vorteilhaft ist. Teilräume 11a, 11b des Beschichtraums 11' können dazu mit in der Zeichnung nicht explizit dargestellten separaten Druckmodulen ausgestattet sein. Je nach Gestaltung des Behälters zur Aufnahme der Beschichtungslösung kann die Trägerfläche einseitig oder zweiseitig mit Polymerlösung beschichtet werden. Bei Unterteilung des Behälterraumes durch den höhenverstellbaren Kanal selbst können gleichzeitig unterschiedliche Beschichtungen der Vor- und Rückseite des Trägermaterials vorgenommen werden, wie dies beispielsweise in Figur 6b gezeigt ist.

Der Kanalraum 21 des Zufuhrkanals 14 kann bei entsprechender Anpassung auch für eine gewünschte Vorbehandlung des Trägermaterials unmittelbar vor der Beschichtung genutzt werden.

Für die Verarbeitung sensibler oder prozess-unverträglicher Additivkomponenten besteht die Möglichkeit, das Trägermaterial damit zu bepudern oder mit einer Suspension oder Emulsion, welche die Zusätze enthält, zu imprägnieren. Auch einfache nicht permanente, z.B. wasserlösliche, Bindersysteme sind geeignet, um beispielsweise metallische Pulver oder andere Feststoffpartikel auf und in dem Trägermaterial vorzufixieren und durch eine anschließende Ummantelung mit einer Polymerlösung, die auch weitere Zusätze enthalten kann, permanent einzuspannen. Die sich daraus ergebenden Vorteile liegen in einer extrem kurzen Kontaktzeit der Additivkomponenten mit der Polymerlösung unter Prozessbedingungen, wie der Prozesstemperatur, ohne zusätzliche Scherbeanspruchung. Durch eine schichtweise Positionierung von miteinander in Wechselwirkung tretenden Additivkomponenten beispielsweise im Trägermaterial und in der Ummantelungsschicht und gegebenenfalls weiterer hinzu fügbarer Schichten eröffnen sich Einsatzgebiete beispielsweise für die Herstellung polymerer elektronischer Bauteile. Zudem können als Trägermaterial selbst metallische Leiter verwendet werden. Dabei besteht zusätzlich die Möglichkeit, in Anlehnung an DE 10 2004 052120 durch zusätzliche Aktivierung der Trägermaterialoberfläche eine kovalente Anbindung für insbesondere sehr dünne Celluloseschichten im Nanometerbereich zu erzielen.

Erstaunlicherweise wurde gefunden, dass bedingt durch das Relaxationsverhalten der polymerhaltigen Beschichtungslösung in einer Entspannungsstrecke, zum Beispiel einem Luftspalt bestimmter wählbarer Ausdehnung, sowie den anschließenden Entquellungsvorgängen der Formkörpernachbehandlung zur Lösungsmittelentfernung und der Trocknung das Trägermaterial durch die sich bildende Polymermantelschicht fest eingespannt wird. Der erhaltene Verbund verfügt über hohe mechanische Bindungskräfte zwischen der Oberfläche des Trägermaterials und der Polymerschicht.

Zudem wurde gefunden, dass durch die Verwendung eines Trägermaterials zur Aufnahme der Abzugskräfte einer Lösungsstrahlverformung selbst sehr labile Polymerlösungen mit sehr hohen Fremdstoffanteilen stabil mit

Formgebungsgeschwindigkeiten, die das Mehrfache der durch das Verformungsvermögen der Lösung begrenzten Verzugsgeschwindigkeit betragen, verformt werden können.

Die Ablaufschritte eines erfindungsgemäßen Verfahrens können in einer besonderen Ausführungsform die folgenden Schritte enthalten: In einem ersten Prozessschritt werden drei Formkörper 1 in einer Vorrichtung 10 zur Herstellung von Formkörpern gebildet. Die Abzugsgeschwindigkeit beträgt typischerweise 20m/min. Die Formkörper 1 werden durch eine Nachbehandlungszone, beispielsweise ein Regenerierbad, geführt und auf Spindeln gewickelt.

In einem nachfolgenden Prozessschritt wird das Lösungsmittel in einem Waschbad ausgewaschen. Da die Waschgeschwindigkeit nur 2 m/min beträgt, werden 30 Formkörper 1 parallel durch das Waschbad geführt.

Die Formkörper können anschließend durch weitere, nicht explizit dargestellte Neutralisationsbäder geführt werden.

Abschließend werden die Formkörper 1 durch ein Avivagebad und einen Trockenofen geführt.

Durch eine Mehrfachanordnung von erfindungsgemäßen Vorrichtungen 1 können Schichten nacheinander auf dem gleichen Träger aufgebaut oder weitere Trägermaterialien angelegt werden. Es können jeweils Mantelmaterialien verschiedener Zusammensetzungen verwendet werden oder Schichten verschiedener Dicken erzeugt werden. Die Schichten können auch durch eine nachfolgende Beschichtung fixiert werden.

Die Beschichtung eines Trägermaterials gewünschter Schichtdicke kann durch wiederholtes Beschichten und Durchlaufen eines Regenerierbades erreicht werden. Bei jedem Beschichtungsschritt wird jeweils nur eine relativ dünne Schicht aufgetragen, aus der das Lösungsmittel im nachfolgenden Regenerierbad 30 praktisch vollständig ausgelöst werden kann.

Die so erzeugten Beschichtungen weisen eine sehr gute Haftung am Trägermaterial 2 auf.

Die folgenden Ausführungsbeispiele dienen zur Illustration der Erfindung. Prozente sind Gewichtsprozente, soweit nicht anders angegeben oder aus dem Zusammenhang unmittelbar ersichtlich.

### Beispiel 1

Aus 16646 g einer 60%-igen wässrigen Lösung von N-Methyl-morpholin-N-Oxid (NMMO) wurde mit einem Zusatz von 580 g Zellstoff von einem Durchschnittspolymerisationsgrad 600 und 3 g Propylgallat in einem Lösegefäß mit Rührwerk eine Celluloselösung mit einem resultierenden Feststoffgehalt von 4% hergestellt. Diese wurde anschließend in die Beschichtungsvorrichtung überführt, welche bei einer Temperatur von 85°C beheizt wurde.

Als Trägermaterial wurde ein Garn Nm 24 der Zusammensetzung 33%/67% Polyester/Baumwolle unbehandelt eingesetzt.

Bei einem Behältervordruck von 2 bar, einer Abzugsgeschwindigkeit von 5 m/min und einem Austrittsdüsendurchmesser von 3 mm konnte ein gleichmäßiges Monofilament mit einem Fadendurchmesser von 500 µm ersponnen werden. Bei verändertem Austrittsdüsendurchmesser 20 von 1,5 mm konnte unter sonst gleichen Bedingungen ein Fadendurchmesser von 300 µm realisiert werden. Durch Änderung des Ringspaltes 17 durch den höhenverstellbaren Zufuhrkanal 14 konnte die Schichtdicke variiert und die Abzugsgeschwindigkeit erhöht werden. So wurde bei einer Abzugsgeschwindigkeit von 20 m/min ein konstanter Enddurchmesser des beschichteten Fadens von 400 µm erreicht.

Der Austritt des beschichteten Trägermaterials aus der Austrittsdüse 20 erfolgte in eine Entspannungstrecke von 2 bis 50 cm Länge, beispielsweise einem Luftspalt, ohne Einfluss auf die gebildete Mantelschicht und die Spinnstabilität. Anschließend erfolgte der vertikale Eintritt in ein Regenerierungsbad von deionisiertem Wasser mit niedrigem Lösungsmittelanteil. Über eine Umlenkeinrichtung unterhalb des Flüssigkeitsspiegels, die fest oder als Rolle ausgeführt sein kann, wurde der beschichtete Faden wieder aus dem Bad geführt und mittels einer Abzugseinrichtung, nachfolgender Waschbäder und einer Wickeleinrichtung zu Strängen gebündelt, die anschließend unter mechanischer Vorspannung getrocknet wurden.

Das so hergestellte Monofilament erhielt eine hohe Steifigkeit und Festigkeit, wodurch es sich für Polieranwendungen eignet. Die aufgebrachte Celluloseummantelung besitzt eine hohe mechanische Bindung an den Trägerfaden.

### Beispiel 2

In Analogie zum Beispiel 1 wurde eine Celluloselösung mit einem höheren Celluloseanteil von 11 % hergestellt und als Beschichtungslösung eingesetzt. Die Beschichtungsvorrichtung wurde bei einer Temperatur von 95°C betrieben. Der Durchmesser der Austrittsdüse 20 betrug 1,5 mm, der der Fadenaustrittsdüse 16 betrug 0,5 mm. Als Trägermaterial wurde ein Polyestergarn der Aufmachung dtex 83/f36 rohweiß texturiert ohne Vorbehandlung eingesetzt.

Bei einem Behältervordruck von 3,4 bar unter Stickstoffatmosphäre und einer Abzugsgeschwindigkeit von 20 m/min wurde ein Verbundfilament konstanten Durchmessers von 200 µm erhalten. Die Nachbehandlung erfolgte wie in Beispiel 1. Das erhaltene Material ist für Anwendungen in der Bürsten- und Pinselindustrie geeignet.

### Beispiel 3

Einer 60%-igen wässrigen Lösung von N-Methyl-morpholin-N-Oxid wurde mechanisch zerkleinerter Zellstoff mit einem Durchschnittspolymerisationsgrad von 600 in einer Menge zugegeben, dass daraus eine Celluloselösung mit einem Anteil von gelöster Cellulose von 10,5% in NMMO-Monohydrat entstand.

Zusätzlich wurde während des Löseprozesses als Funktionaladditiv eine Menge an Zinkoxid von 20% bezogen auf Cellulose zugesetzt und die Mischung durch Wasserentzug bei Scherung unter Vakuum bei steigender Prozesstemperatur bis 94°C in den Lösungszustand der Cellulose überführt. Die so erhaltene mit Zinkoxid beladene Celluloselösung wurde in die Beschichtungseinrichtung überführt und unter gleichen Bedingungen wie im Beispiel 3 die Beschichtung des gleichen Trägermaterials durchgeführt. Die Nachbehandlung erfolgte wie im Beispiel 1. Das erhaltene Monofilament von weißer Farbe weist zusätzliche antibakterielle Eigenschaften und eine abrasive Wirkung auf und eignet sich für Hygieneanwendungen im Dentalbereich.

### Beispiel 4

In 18207 g 60%-igem wässrigem N-Methyl-morpholin-N-Oxid wurden 1400 g mechanisch zerkleinerter Zellstoff mit einem Durchschnittspolymersationsgrad DP 600 unter Zusatz von 8,8 g Propylgallat sowie als Funktional-Additiv 560 g Siliziumkarbid einer fraktionierten Korngröße von 120 µm zugegeben. Diese Mischung wurde in einem Lösegefäß mit Rührwerk bei Scherung unter Vakuum und ansteigender Prozesstemperatur bis 94°C in den Lösezustand der Cellulose überführt, wobei ca. 5700 g Wasser abdestilliert wurden.

Die erhaltene Lösung enthielt 9,6 % gelöste Cellulose sowie 3,8% Siliziumkarbid in homogener Verteilung. Diese Lösung wurde in die Beschichtungseinrichtung überführt, welche auf 90 °C beheizt wurde. Als Beschichtungsträger wurde ein Lyocell-Multifilament von 80 tex F 120 ohne Vorbehandlung durch die Fadenaustrittsdüse 16 mit einem Lochdurchmesser von 1 mm dem Beschichtungsraum 19 zugeführt. Bei einem Behälterdruck von 4,2 bar unter Stickstoffatmosphäre und einem Austrittsdüsendurchmesser 20 von 3 mm wurde bei einer Abzugsgeschwindigkeit von 15 m/min ein beschichtetes Monofilament von 850 µm Enddurchmesser erhalten. Die Nachbehandlung erfolgte wie im Beispiel 1. Das hergestellte Material eignet sich besonders als sehr abrasive Schleifborste für unterschiedlichste Oberflächenbearbeitungen.

### Beispiel 5

7573 g 60%-igem wässrigem N-Methyl-morpholin-N-Oxid wurden 250g mechanisch zerkleinerter Zellstoff mit einem Durchschnittspolymersationsgrad DP von 600 unter Zusatz von 3 g Propylgallat sowie 4510 g keramische Metalloxidpulver zugegeben. Diese Mischung wurde in einem Lösegefäß mit Rührwerk bei Scherung unter Vakuum und ansteigender Prozeßtemperatur bis 94°C in den Lösezustand der Cellulose überführt. Die hochdotierte Polymerlösung mit einem resultierenden Feststoffgehalt von 47,6% in der Lösung wurde in die Beschichtungsvorrichtung überführt, welche bei 80 °C beheizt wurde.

Mit dieser Zusammensetzung wurden durch verschiedene Einstellungen unterschiedliche Verbunddurchmesser erzielt, die in nachfolgender Tabelle zusammengefasst sind.

| Behälterdruck | Trägermaterial | Abzugsgeschwindigkeit | Düsendurchmesser 16/20 in mm | Fadendicke |
|---|---|---|---|---|
| 1,1 bar | Lyocell 10 tex/F50 | 10 m/min | 0,5 / 1,5mm | 320 µm |
| 1,3 bar | Lyocell 10 tex/F50 | 10 m/min | 0,5 / 1,5 mm | 600 µm |
| 1,5 bar | Lyocell 80 tex/120 | 20 m/min | 1,0 / 1,5 mm | 800 µm |

Durch Veränderung des Ringspaltes 17 mit Hilfe des höhenverstellbaren Zuführkanals 14, dessen konisch ausgebildetes Ende 15 durch seine Positionierung gleichzeitig den Ringspalt 17 begrenzt sowie als Absperrmöglichkeit im Störungsfall dient, kann der Polymerlösungszufluss in den Beschichtungsraum 19 und damit die aufgebrachte Schichtdicke reguliert werden.

### Beispiel 6

In 16130 g einer 60%-igen wässrigen Lösung von N-Methylmorpholin-N-Oxid wurden 1237 g mechanisch zerkleinerter Zellstoff von einem

Durchschnittspolymerisationsgrad DP von 600 und weiterem Zusatz von 7,8 g Propylgallat und 412 g Diamantpulver einer Partikelgröße von 3 - 6 µm zugegeben. Diese Mischung wurde in einem Lösegefäß mit Rührwerk bei Scherung unter Vakuum und ansteigender Prozesstemperatur bis 94°C in den Lösezustand der Cellulose überführt, wobei ca. 5100 g Wasser abdestilliert wurden. Die erhaltene Lösung enthielt 9,6 % gelöste Cellulose sowie 3,2 % Diamantpartikel in homogener Verteilung.

Diese Lösung wurde in den Behälterraum 11 der Beschichtungseinrichtung 10 überführt, welcher bei 95 °C beheizt wurde.

Die Düse 16 wurde verschlossen. Als Düse 20 wurde eine Dreifachdüse mit einem Bohrungsdurchmesser von 3 x 1 mm verwendet. Bei einem Behälterdruck von 6,5 bar konnten bei einer Abzugsgeschwindigkeit von 30 m/min Filamente mit konstanten Enddurchmesser von 150 µm ersponnen werden.

Bedingt durch den abrasiv wirkenden Partikelzusatz wie auch im Beispiel 4 ist eine klassische Verformung solcher Polymerlösungen zu Fäden unter Einsatz von fördernden und dosierenden Verdrängerpumpen, vorrangig Zahnradpumpen bei diesen Inhaltsstoffen nicht möglich. Die hier jedoch vorgestellte Verformungs- und Beschichtungseinrichtung erlaubt auch eine kontinuierliche industrielle Verarbeitung solcher Additiv-beladenen Polymerlösungen.

Beispielsweise kann durch einen Schleuseneintrag nachzuspeisender Beschichtungslösung ohne Unterbrechung des Polymerlösungsaustrages die Fertigung kontinuierlich fortgesetzt werden.

### Beispiel 7

Ein Lyocell-Zellstoff (Eukalyptus-Sulfitzellstoff, Cuoxam-DP: 525) wurde im Flottenverhältnis 1:20 mit einem Rührer vom Typ Ultra-Turrax ® in Wasser aufgeschlagen und durch Abpressen auf 35 Masse-% Feststoff entwässert.

Durch Dispergieren von 71,4 g pressfeuchter Cellulose in 321,4 g 1-Ethyl-3-methyl-imidazoliumacetat, welches 30 Masse-% Wasser und 0,9 g NaOH enthält, wurde eine homogene Suspension erhalten, welche in einen Vertikalkneter überführt wurde. Anschließend wurde unter Scherung, langsam steigender Temperatur von 75 auf 115°C und abnehmendem Druck von 800 bis 15 mbar unter Wasserentfernung eine mikroskopisch homogene, 10 masse-%ige Celluloselösung hergestellt. Diese Lösung wird dann analog Beispiel 2 weiterverarbeitet.

### Beispiel 8

Ein Lyocell-Zellstoff (Eukalyptus-Sulfitzellstoff, Cuoxam-DP: 556) wurde im Flottenverhältnis 1:20 in Wasser aufgeschlagen und auf einen Feuchtegehalt von 60 Masse-% abgepresst. 43,8 g dieser pressfeuchten Cellulose wurden in 475 g 1-Butyl-3-methyl-imidazoliumchlorid, welches 30 Masse-% Wasser und Stabilisatorzusätze (0,2% NaOH, 0,02% Gallussäurepropylester, bezogen auf die herzustellende Polymerlösung) enthielt, dispergiert. Man erhält 520 g einer homogenen Suspension, welche in einen Vertikalkneter eingebracht wird und unter Scherung, steigender Temperatur von 80 bis 125°C und abnehmendem Druck von 800 bis 20 mbar unter Wasserentfernung in eine mikroskopisch homogene, 5 masse-%ige Celluloselösung überführt wird. Diese Lösung wird dann analog Beispiel 1 weiterverarbeitet.

### Beispiel 9

Das auf 3-5 mm Länge geschnittene Seidenfibroin des Bombyx mori wird in Wasser dispergiert, im Flottenverhältnis 1:20 aufgeschlagen und 12 h quellen gelassen. Durch leichtes Abpressen wird auf 10 Masse% an Fibroin entwässert. Durch Dispergieren von 105 g pressfeuchtem Seidenfibroin in 74,375 g 80%iger wässriger Lösung von 1-Butyl-3-methyl-imidazoliumacetat (BMIMAc), dem man zuvor 0,5 Masse % Propylgallat/Natriumhydroxid als Stabilisator zugesetzt hat, erhält man 179,375 g Maische, die nach Eintrag in einen Kneter unter starker Scherung, einer Temperatur von 80-90°C und abnehmendem Druck von 850 bis 5 mbar unter vollständiger Wasserentfernung in 70 g einer homogenen Lösung überführt wird. Die Lösezeit beträgt 160 min. Die erhaltene Lösung wird in den Behälter 2 eingefüllt und analog Beispiel 1 weiterverarbeitet.

### Beispiel 10

7,0 g fein gemahlenes Mais-Zein wird in Wasser dispergiert und abfiltriert. Zu 78,75 g einer 80%igen wässrigen Lösung von 1-Butyl-3-methyl-imidazoliumchlorid (BMIMCI), der man zuvor 0,5 Masse % Propylgallat/Natriumhydroxid als Stabilisator zugesetzt hat, wird unter Rühren portionsweise das feuchte Protein zugegeben, so dass eine homogene Suspension entsteht. Diese wird nach Eintrag in einen Kneter unter starker Scherung, einer Temperatur von 80 bis 90°C und abnehmendem Druck von 850 bis 6 mbar unter vollständiger Wasserentfernung in 70 g einer homogenen Lösung überführt. Die Lösezeit beträgt 120 min. Die erhaltene Lösung wird in den Behälter 12 eingefüllt und analog Beispiel 1 weiterverarbeitet.

### Beispiel 11

Eine 7,5 %-ige (Masse) Homopolymer-PAN-Lösung in 1-Butyl-3-methyl-imidazoliumchlorid (BMIMCI) wurde mit 95°C in die Beschichtungsvorrichtung überführt, welche ebenfalls bei einer Temperatur von 95°C beheizt wurde. Als Trägermaterial wurde ein Garn Nm 24 der Zusammensetzung 67%/33% Polyester/Baumwolle unbehandelt eingesetzt. Bei einem Behältervordruck von 2 bar, einer Abzugsgeschwindigkeit von 6 m/min und einem Austrittsdüsendurchmesser 20 von 1,5 mm konnte ein gleichmäßiges Monofilament mit einer Fadenenddurchmesser von 300 µm erhalten werden. Durch Änderung des Ringspaltes 17 durch den höhenverstellbaren Zuführungskanal 14 konnte die Schichtdicke variiert und die Abzugsgeschwindigkeit erhöht werden. So wurde bei einer Abzugsgeschwindigkeit von 25 m/min ein konstanter Enddurchmesser des beschichteten Fadens von 400 µm erreicht.

Anschließend erfolgte der vertikale Eintritt in ein wässriges BMIMCI-haltiges (5 % Masse) Fällbad. Anschließend wurde der Formkörper lösungsmittelfrei ausgewaschen, bei 100°C auf beheizten Galetten getrocknet und als Filament aufgespult.

### Beispiel 12

Eine Spinnlösung, bestehend aus 4,6 % Homopolymer PAN, 23,1 % Aluminiumoxidpartikeln (Typ CT 3000 SG, Fa. Alcoa mit 0,7 µm Teilchengröße) und 72,3 % BMIMCI wurde mit 95°C in die Beschichtungsvorrichtung eingeführt. Der Träger war ein 130 µm dickes, nicht präpariertes, PAN-Monofilament. Der Ringspalt 17 wurde über den höhenverstellbaren Zuführungskanal 14 an die Abzugsgeschwindigkeit von 30 m/min angepasst. Auf diese Weise wurde nach Auswaschung und Trocknung ein Gesamtfilament von 200 µm Durchmesser erhalten. Nach Sinterung des erhaltenen Al₂O₃ beschichteten Monofilamentes bei 1400 °C wurden durch Ausbrennen der PAN-Phasen und Versinterung der Aluminiumoxidpartikel poröse Hohlfasern von 180 µm Außendurchmesser bei einer Wandstärke von 22 µm erhalten.

### Beispiel 13

Eine 12,5 %-ige (Masse) Copolymer PAN- Lösung (Copolymer Typ Dolan) in DMF wurde bei 25°C in die Beschichtungsvorrichtung überführt. Als Trägermaterial wurde ein 150 µm dickes Cellulose-Monofilament, hergestellt mit der Lyocell-Technologie, eingesetzt. Bei einem Behältervordruck von 1 bar, einer Abzugsgeschwindigkeit von 30 m/min und einem Austrittsdüsendurchmesser 20 von 1000 µm konnte ein gleichmäßiges Monofilament mit einem Fadenenddurchmesser von 250 µm erhalten werden. Die Entfernung des Lösungsmittels DMF aus der Beschichtung erfolgte am vertikal austretenden Filament durch laminares Anblasen mit Heißluft bei 145°C auf einer Strecke von 2 Metern.

### Beispiel 14

Eine 6 % Copolymer PAN-Lösung (Copolymer Typ Dolan) in 1-Etyl-3-methyl-imidazoliumnitrat wurde bei 100°C auf die Beschichtungsvorrichtung gegeben, wobei die Austrittsdüse 20 in die Entspannungsstrecke eine Schlitzdüse von 500 µm Schlitzbreite war. Als Trägerfolie wurde eine Polyesterfolie von 100 µm Dicke genutzt, die mit der Copolymerlösung ummantelt wurde. Bei einem Abzug von 5 m/min ergab sich nach Auswaschung und Trocknung eine PAN-beschichtete Compoundfolie von 125 µm. Bei Erhöhung der Abzugsgeschwindigkeit der Folie auf 20 m/min ergab sich eine Foliendicke von 113 µm.

### Beispiel 15

Analog Beispiel 14, jedoch wurde eine 10% Copolymer PAN-Lösung in DMAC bei einer Temperatur von 30 °C als Beschichtungslösung verwendet. Bei einer Abzugsgeschwindigkeit von 15 m/min wurde auf der Trägerfolie durch Einstellung des Schlitzes 20 eine 15 µm starke PAN-Schicht aufgebracht. Die Reduzierung der Abzugsgeschwindigkeit auf 8 m/min ergab eine Schichtdicke von 22 µm. Die Entfernung des Lösungsmittels DMAC aus der Beschichtung erfolgte jeweils an der vertikal austretenden Bikomponentenfolie durch laminares Anblasen mit Heißluft bei 155°C auf einer Strecke von 2 Metern im Gegenstromprinzip.

### Beispiel 16

Analog Beispiel 14, jedoch wurde ein Polyester-Spinnvlies mit einem Flächengewicht von 60g/m² beschichtet. Bei einer Abzugsgeschwindigkeit von 8 (15) m/min ergab sich ein PAN-laminiertes Polyestervlies mit 130 g/m².

### Beispiel 17

Es wurde eine 13 % (Masse) PVA Lösung in Wasser hergestellt und bei 25 °C in die Beschichtungsvorrichtung gegeben. Die in der Beschichtungseinrichtung 10 befindliche Lochdüse 16 hatte einen Durchmesser von 1 mm. Der zu beschichtende Faden bestand aus einem Multifilament von 150 Einzelfasern Polyester mit einer Gesamtfeinheit von 100 tex. Die Abzugsgeschwindigkeit betrug 15 m/min. Die PVA-Lösung wurde mit einem Druck von 0,5 bar in den Beschichtungsraum 19 geführt und auf den zu beschichtenden Faden aufgetragen. Nach Austritt aus der Düse 20 von 2 mm Durchmesser und Passieren eines Luftspaltes von 10 cm wurde die Lösungsschicht PVA/Wasser in einem Fällbad, welches 400 g/l Natriumsulfat enthielt, ausgefällt, mit verdünnter Natriumsulfatlösung gewaschen und anschließend mit Luft bei 60°C getrocknet und bei 180°C thermofixiert. Der Anteil von PVA im beschichteten Faden betrug 25 %.

### Beispiel 18

Es wurde eine 14 % (Masse) PVA Lösung in einer Wasser-/ Ethanolmischung (3,5/1) hergestellt und bei 25 °C in die Beschichtungsvorrichtung gegeben. Die in der Beschichtungseinrichtung befindliche Lochdüse 16 hatte einen Durchmesser von 0,5 mm. Der zu beschichtende Faden bestand aus einem Multifilament von 80 Einzelfasern Polyester mit einer Gesamtfeinheit von 50 tex. Die Abzugsgeschwindigkeit betrug 30 m/min. Die PVA-Lösung wurde mit einem Druck von 0,5 bar in den Beschichtungsraum 19 geführt und auf den zu beschichtenden Faden aufgetragen. Nach Austritt aus der Düse 20 von 1,0 mm Durchmesser wurde das beschichtete System mit einem laminaren Luftstrom bei einer Temperatur von 80°C im Gegenstrom getrocknet.

### Beispiel 19

Analog Beispiel 12, jedoch enthielt die PVA-Lösung 6 % (Masse) PVA und zusätzlich 15,5% Leitruß. Die getrockneten Fäden zeichneten sich durch einen spezifischen elektrischen Durchgangswiderstand von 2 Ohm / cm aus und hatten damit ausgeprägte Ladungsableitungseigenschaften.

Die hier angeführten Ausführungsbeispiele stellen nur eine kleine Auswahl der Anwendungsmöglichkeiten des vorgestellten Beschichtungsverfahrens dar. Wie zuvor bereits angeführt, können verschiedenste Komponenten entweder direkt in die Polymerlösung eingebracht und durch eine Beschichtung auf einen beliebigen Träger aufgebracht und fixiert werden oder durch eine Vorbehandlung auf dem Träger positioniert und anschließend durch die Umhüllung mit einer Polymerlösung, aus welcher das Polymer regeneriert wird, permanent verankert werden. Eine Mehrfachbeschichtung von Trägermaterialien in unmittelbar folgenden Arbeitsgängen mit unterschiedlich funktionalisierten Polymerlösungen, deren Komponenten miteinander in Wechselwirkung treten können, eröffnet weitere Anwendungsgebiete.

## Patentansprüche

1. Verfahren zur Herstellung eines Formkörpers mit polymerer Beschichtung, umfassend die Schritte,
a) Lösen von Polymeren in einem Lösungsmittel im Direktlöseverfahren zu einer Polymerlösung, aus der die polymere Beschichtung (Mantel) hergestellt wird,
b) Ausbilden einer vorläufigen Schicht auf dem Formkörper (Träger) in einem Beschichtungsraum durch Zwangsbenetzung in einem variierbaren Druck- und Strömungsgleichgewicht mit der Polymerlösung, die durch einen vordefinierten Spalt mit definiertem Druck in den Beschichtungsraum geführt wird,
c) Führen des Formkörpers mit der anhaftenden vorläufigen Schicht durch einen Spalt und durch eine Entspannungsstrecke definierter Länge, in der sich die Polymere in der vorläufigen Schicht ausrichten und viskoelastisch entspannen und sich eine endgültige, spannungsarme Polymerlösungsschicht ausbildet, wobei sich durch Einstellen der Geschwindigkeit des Formkörpers, von Druck und Viskosität der Polymerlösung, Größe des Spaltes durch den die Polymerlösung auf den Formkörper (Träger) trifft, Größe des Spaltes durch den der Formkörper gemeinsam mit der anhaftenden Polymerlösungsschicht den Beschichtungsraum verläßt und die Länge der Entspannungsstrecke eine definierte Schicht ausbildet, und
d) Entfernen des Lösungsmittels aus der Polymerlösungsschicht.

2. Verfahren nach Anspruch 1, **dadurch gekennzeichnet, dass** die Länge der Entspannungsstrecke mindestens 5 mm beträgt bei definierten Umgebungsbedingungen wie Druck, Temperatur, Feuchte und atmosphärische Zusammensetzung zur Ausbildung der entspannten Beschichtung.

3. Verfahren nach Anspruch 1, **dadurch gekennzeichnet, dass** zur Herstellung der Polymerlösung direkt lösliche natürliche, synthetische oder biotechnologisch hergestellte Polymere verwendet werden.

4. Verfahren zur Herstellung von Formkörpern mit polymerer Beschichtung gemäß mindestens einem der Ansprüche 1 bis 3, **dadurch gekennzeichnet, dass** als Polymerlösung eine Celluloselösung verwendet wird, die im Direktlöseverfahren in N-Methyl-morpholin-N-Oxid oder in ionischen Flüssigkeiten ohne Derivatisierung gewonnen wird.

5. Verfahren zur Herstellung von Formkörpern mit polymerer Beschichtung gemäß mindestens einem der Ansprüche 1 bis 4, **dadurch gekennzeichnet, dass** als Lösungsmittel zur Herstellung der Polymerlösung polare Lösungsmittel, bevorzugt Wasser, Alkohol, Aceton, Acetonitril, Dimethylsulfoxid oder Glyzerin, Salze, bevorzugt LiCl oder Natriumrhodanid, Säuren, bevorzugt Essigsäure, Ammoniak, organische Lösungsmittel, bevorzugt Dimethylformamid, Dimethylacetamid oder N-Methylpyrrolidon, tertiäre Aminoxide, bevorzugt NMMNO, unpolare Lösungsmittel, bevorzugt kurzkettige Kohlenwasserstoffe, speziell Benzin, Ether, oder ionische Flüssigkeiten, bevorzugt Alkylimidazoliumchloride oder -acetate oder -nitrate, verwendet werden.

6. Verfahren zur Herstellung von Formkörpern mit polymerer Beschichtung gemäß mindestens einem der Ansprüche 1 bis 5, **dadurch gekennzeichnet, dass** eine Polymerlösung verwendet wird, welche mindestens ein Funktionaladditiv enthält, wobei das Funktionaladditiv in flüssiger oder fester Form verwendet wird, bevorzugt mit einem Gewichtsanteil von bis zu 95% an der Beschichtung, und wobei die Tröpfchen- oder Teilchengröße des Funktionaladditivs bevorzugt zwischen 1 nm und 3 mm beträgt.

7. Verfahren nach mindestens einem der Ansprüche 1 bis 6, **dadurch gekennzeichnet, dass** der Formkörper dem Beschichtungsraum (19; 19') durch einen in Austrittsrichtung des Kerns (2) verschiebbaren Zufuhrkanal (14) zugeführt wird, der den Formkörper und die Polymerlösung vor dem Beschichten voneinander trennt und dass die Breite des Spalts (17) zwischen Zufuhrkanal (14) und Innenwand (18) des Beschichtungsraums (19; 19') dadurch eingestellt wird.

8. Verfahren nach mindestens einem der Ansprüche 1 bis 7, **dadurch gekennzeichnet, dass** die Schichtdicke der Beschichtung durch eine Einstellung des Drucks im Behälter (12; 12'),durch eine Positionierung des Zufuhrkanals (14; 14') in den Beschichtungsraum (19; 19'), durch eine Wahl des Öffnungsquerschnitts der Austrittsöffnung (20), durch eine Einstellung der Abzugsgeschwindigkeit des Formkörpers, durch eine Einstellung der Austrittsgeschwindigkeit der Polymerlösung in den Beschichtungsraum und/oder durch die Wahl der Zusammensetzung der Polymerlösung eingestellt wird.

9. Verfahren nach mindestens einem der Ansprüche 1 bis 8, **dadurch gekennzeichnet, dass** der Formkörper in dem Zufuhrkanal (14; 14') vorbehandelt wird, insbesondere mit abrasiven Teilchen bestückt wird.

10. Verfahren nach mindestens einem der Ansprüche 1 bis 9, **dadurch gekennzeichnet, dass** bei Verwendung eines flächigen Formkörpers
a) eine ein- oder beidseitige Beschichtung erfolgt, und/oder
b) die Schichtdicke und/oder die Zusammensetzung der Beschichtung auf der Ober- und Unterseite des Formkörpers gegebenenfalls unterschiedlich ausgeführt werden, und/oder
c) dass bei Verwendung von flächigen und durchlässigen Formkörpern in einem Teilbereich des Beschichtungsraums (19; 19') ein Unterdruck erzeugt wird, wodurch die Polymerlösung in den Formkörper eindringt bzw. ihn durchdringt.

11. Formkörper mit polymerer Beschichtung, herstellbar durch ein Verfahren gemäß mindestens einem der Ansprüche 1 bis 10, dessen Beschichtung bevorzugt eine Schichtdicke von 200 nm bis 5 mm aufweist.

12. Formkörper mit polymerer Beschichtung gemäß Anspruch 11, **dadurch gekennzeichnet, dass** die Beschichtung mindestens ein Funktionaladditiv, insbesondere mit einem Gewichtsanteil von bis zu 95% an der Beschichtung, enthält, wobei das Funktionaladditiv Feststoffpartikel, die im Ausgangsstoff des Formkörpers dispergiert wurden, und/oder eine Flüssigkeit, die im Ausgangsstoff des Formkörpers emulgiert wurde, umfasst und die Tröpfchen- bzw. Partikelgröße von 1 Nanometer bis 3 mm beträgt.

13. Formkörper mit polymerer Beschichtung nach Anspruch 11 oder 12, **dadurch gekennzeichnet, dass** das Funktionaladditiv eines oder mehrere Mitglieder der Gruppe bestehend aus Carbiden, insbesondere Siliziumcarbid oder Borcarbid, Metalloxiden, insbesondere Aluminiumoxid, Korund, Yttriumoxid oder Ceroxid, Diamant, Cubisches Bornitrid (CBN), Hartmetallen, Duft- und/oder Pflegestoffen, Ölen, wie Paraffin, reibungsvermindernden Pigmenten, wie Teflon, Molybdänsulfid oder Graphit, Farbpigmenten, wie TiO₂, oder leitfähigen Substanzen wie Ruß, Kohlenstoff-Nanofasern oder -tubes, Aluminium, Kupfer, Silber, oder antimikrobiellen Substanzen wie Metalle oder Metallverbindungen, z.B. Silber oder Silberverbindungen, Zink oder Zinkverbindungen, Kupfer oder Kupferverbindungen umfasst.

14. Formkörper mit polymerer Beschichtung gemäß einem oder mehreren der Ansprüche 11 bis 13, der mindestens 5 Gew.-%, bevorzugt mehr als 50 Gew.-%, Cellulose enthält, **dadurch gekennzeichnet, dass** die Beschichtung mindestens ein Funktionaladditiv enthält, welches in der Cellulose eingelagert ist, wobei das Funktionaladditiv Feststoffpartikel, die im Ausgangsstoff des Formkörpers dispergiert wurden, und/oder eine Flüssigkeit, die im Ausgangsstoff des Formkörpers emulgiert wurde, umfasst und der Formkörper einen Durchmesser von mindestens 0,01 mm, bevorzugt zwischen 0,01 mm und 3 mm aufweist.

15. Verwendung von Formkörpern mit polymerer Beschichtung gemäß mindestens einem der Ansprüche 11 bis 14 zur Herstellung von Borsten, Bürsten und/oder Pinseln, zur Herstellung von Flächengebilden wie Vliesstoffen, Membranen, Papieren, beschichteten Folien und technischen Textilen.

## Claims

1. A process for producing a shaped article having a polymeric coating, said process comprising the steps of
a) dissolving polymers in a solvent in the direct dissolving process to form a polymer solution from which the polymeric coating (sheath) is produced,
b) forming a provisional layer on the shaped article (carrier) in a coating space by forced wetting in variable pressure and flow equilibrium with the polymer solution which is fed through a predefined gap at defined pressure into the coating space,
c) feeding the shaped article with the adherent provisional layer through a gap and through a relaxation sector of defined length in which the polymers in the provisional layer align and undergo viscoelastic relaxation to form a final low-stress polymer solution layer, wherein, due to adjusting the shaped article's speed, the polymer solution's pressure and viscosity, size of gap wherethrough the polymer solution meets the shaped article (carrier), size of gap wherethrough the shaped article leaves the coating space together with the adhering polymer solution layer and due to relaxation sector length, a defined layer is produced, and
d) removing the solvent from the polymer solution layer.

2. The process as claimed in claim 1 wherein the length of said relaxation sector is at least 5 mm at defined ambient conditions such as pressure, temperature, moisture and atmospheric composition to form the relaxed coating.

3. The process as claimed in claim 1 wherein the polymer solution is produced using directly soluble natural, synthetic or biotechnologically produced polymers.

4. The process for producing shaped articles having a polymeric coating as defined in one or more of claims 1 to 3 which comprises using a polymer solution comprising a cellulose solution obtained in the direct dissolving process in N-methylmorpholine N-oxide or in ionic liquids without derivatization.

5. The process for producing shaped articles having a polymeric coating as defined in one or more of claims 1 to 4 wherein the solvent used for producing the polymer solution comprises polar solvents, preferably water, alcohol, acetone, acetonitrile, dimethyl sulfoxide or glycerol, salts, preferably LiCl or sodium thiocyanate, acids, preferably acetic acid, ammonia, organic solvents, preferably dimethylformamide, dimethylacetamide or N-methylpyrrolidone, tertiary amine oxides, preferably NMMNO, apolar solvents, preferably short-chain hydrocarbons, specifically petroleum, ether, or ionic liquids, preferably alkylimidazolium chlorides or acetates or nitrates.

6. The process for producing shaped articles having a polymeric coating as defined in one or more of claims 1 to 5 wherein a polymer solution used contains at least one functional additive, wherein the functional additive is used in liquid or solid form, preferably at a weight fraction of up to 95% of the coating, and wherein the droplet or particle size of the functional additive is preferably between 1 nm and 3 mm.

7. The process as claimed in one or more of claims 1 to 6 wherein the shaped article is fed to the coating space (19; 19') through a feed channel (14) which is slidable in the exit direction of the core (2) and which separates the shaped article and the polymer solution from each other before the coating operation and wherein the width of the gap (17) between said feed channel (14) and the inside wall (18) of said coating space (19; 19') is adjusted thereby.

8. The process as claimed in one or more of claims 1 to 7 wherein the layer thickness of coating is adjusted by adjusting the pressure in said container (12; 12'), by positioning said feed channel (14; 14') into said coating space (19; 19'), by choosing the opening cross-section of the outlet opening (20), by adjusting the withdrawal speed of shaped article by adjusting the exit speed of polymer solution into the coating space, and/or by choosing the composition of the polymer solution.

9. The process as claimed in one or more of claims 1 to 8 wherein the shaped article is pretreated in said feed channel (14; 14') and more particularly is endowed with abrasive corpuscles.

10. The process as claimed in one or more of claims 1 to 9 wherein when a sheetlike shaped article is used
a) it is coated on one side or on both sides, and/or
b) the layer thickness and/or the composition of coating is optionally made different on the top and bottom sides of the shaped article, and/or
c) when sheetlike and pervious shaped articles are used, an underpressure is produced in a sub-region of said coating space (19; 19') to cause the polymer solution to penetrate into/through the shaped article.

11. A shaped article with polymeric coating, obtainable via a process as defined in one or more of claims 1 to 10, the coating of which preferably has a layer thickness in the range from 200 nm to 5 mm.

12. The shaped article with polymeric coating as defined in claim 11 wherein the coating contains at least one functional additive, especially at a weight fraction of up to 95% of the coating, wherein said functional additive comprises solid particles which were dispersed in the starting material of the shaped article, and/or a liquid which was emulsified in the starting material of the shaped article, and the droplet/particle size is in the range from 1 nanometer to 3 mm.

13. The shaped article with polymeric coating as claimed in one or more of claims 11 or 12 wherein the functional additive comprises one or more members of the group consisting of carbides, especially silicon carbide or boron carbide, metal oxides, especially alumina, korundum, yttria or ceria, diamond, cubic boron nitride (CBN), hard metals, scent and/or care chemicals, oils, such as paraffin, friction-reducing pigments, such as Teflon, molybdenum sulfide or graphite, color pigments, such as TiO2, or conductive substances such as carbon black, carbon nanofibers or nanotubes, aluminum, copper, silver, or antimicrobial substances such as metals or metal compounds, for example silver or silver compounds, zinc or zinc compounds, copper or copper compounds.

14. The shaped article with polymeric coating as defined in one or more of claims 11 to 13 which contains at least 5% by weight and preferably more than 50% by weight of cellulose, wherein the coating contains at least one functional additive embedded in the cellulose, wherein said functional additive comprises solid particles dispersed in the starting material of the shaped article and/or a liquid emulsified in the starting material of the shaped article, and said shaped article has a diameter of at least 0.01 mm and preferably between 0.01 mm and 3 mm.

15. The use of shaped articles with polymeric coating as defined in at least one of claims 11 to 14 for production of bristles, stiff brushes and/or soft brushes, for production of sheet bodies such as bonded fibrous nonwoven webs, membranes, papers, coated foils and industrial textiles.

## Revendications

1. Procédé de fabrication d'un corps moulé doté d'un revêtement de polymère, comprenant les étapes consistant à :
a) dissoudre des polymères dans un solvant par un processus de dissolution direct pour obtenir une solution de polymère dont le revêtement de polymère (enveloppe) est constitué,
b) former une couche préliminaire sur le corps moulé (support) dans un espace de revêtement par imprégnation forcée dans un équilibre variable de pression et de flux avec la solution de polymère, qui est guidée à travers un intervalle prédéfini sous pression définie dans l'espace de revêtement,
c) acheminer le corps moulé avec la couche préliminaire qui y adhère à travers un intervalle et sur un tronçon de détente de longueur définie, dans lequel les polymères s'orientent dans la couche préliminaire et se détendent en mode viscoélastique pour former une couche de solution de polymère finale sans tension, dans lequel, par réglage de la vitesse du corps moulé, de la pression et de viscosité de la solution de polymère, de la grandeur de l'intervalle à travers lequel la solution de polymère atteint le corps moulé (support), de la grandeur de l'intervalle à travers lequel le corps moulé quitte l'espace de revêtement conjointement avec la couche de solution de polymère qui y adhère et de la longueur du tronçon de détente, il se forme une couche définie et
d) éliminer le solvant de la couche de solution de polymère.

2. Procédé selon la revendication 1, **caractérisé en ce que** la longueur du tronçon de détente atteint au moins 5 mm dans des conditions ambiantes définies telles que la pression, la température, l'humidité et la composition atmosphérique pour former le revêtement détendu.

3. Procédé selon la revendication 1, **caractérisé en ce que** l'on utilise des polymères naturellement directement solubles, synthétiques ou fabriqués par un processus biotechnologique.

4. Procédé de fabrication de corps moulés dotés d'un revêtement de polymère selon au moins l'une quelconque des revendications 1 à 3, **caractérisé en ce que** l'on utilise comme solution de polymère une solution cellulosique qui est obtenue par le procédé de dissolution directe dans du N-méthyl-morpholine-N-oxyde ou dans des liquides ioniques sans dérivatisation.

5. Procédé de fabrication de corps moulés dotés d'un revêtement de polymère selon au moins l'une quelconque des revendications 1 à 4, **caractérisé en ce que** l'on utilise comme solvant pour la fabrication de la solution de polymère des solvants polaires, de préférence de l'eau, un alcool, de l'acétone, du sulfoxyde de diméthyle ou de la glycérine, des sels, de préférence du LiCl ou du thiocyanate de sodium, des acides, de préférence de l'acide acétique, de l'ammoniac, des solvants organiques, de préférence du diméthyl-formamide, du diméthylacétamide ou de la N-méthyl-pyrrolidone, des oxydes d'amines tertiaires, de préférence du NMMNO, des solvants non polaires, de préférence des hydrocarbures à chaîne courte, particulièrement du benzène, de l'éther ou des liquides ioniques, de préférence du chlorure ou de l'acétate ou du nitrate d'alkylimidazolium.

6. Procédé de fabrication de corps moulés dotés d'un revêtement de polymère selon au moins l'une quelconque des revendications 1 à 5, **caractérisé en ce que** l'on utilise une solution de polymère qui contient au moins un additif fonctionnel, dans lequel l'additif fonctionnel est utilisé sous forme liquide ou solide, de préférence en fraction pondérale jusqu'à 95 % sur le revêtement, et dans lequel la grosseur des gouttelettes ou des particules de l'additif fonctionnel atteint de préférence une valeur comprise entre 1 nm et 3 mm.

7. Procédé selon au moins l'une quelconque des revendications 1 à 6, **caractérisé en ce que** le corps moulé est acheminé à l'espace de revêtement (19 ; 19') à travers un canal d'alimentation (14) déplaçable dans le sens de sortie du noyau (2), lequel canal sépare mutuellement le corps moulé et la solution de polymère avant le revêtement et **en ce que** la largeur de l'intervalle (17) est de ce fait réglée entre le canal d'alimentation (14) et la paroi interne (18) de l'espace de revêtement (19 ; 19').

8. Procédé selon au moins l'une quelconque des revendications 1 à 7, **caractérisé en ce que** l'épaisseur de couche du revêtement est réglée par un réglage de la pression dans le récipient (12 ; 12'), un positionnement du canal d'alimentation (14 ; 14') dans l'espace de revêtement (19 ; 19'), un choix de la section transversale de l'ouverture de sortie (20), un réglage de la vitesse d'évacuation du corps moulé, un réglage de la vitesse de sortie de la solution de polymère dans l'espace de revêtement et/ou le choix de la composition de la solution de polymère.

9. Procédé selon au moins l'une quelconque des revendications 1 à 8, **caractérisé en ce que** le corps moulé est prétraité dans le canal d'alimentation (14 ; 14'), en particulier pourvu de particules abrasives.

10. Procédé selon au moins l'une quelconque des revendications 1 à 9, **caractérisé en ce que**, lors de l'utilisation d'un corps moulé plat,
a) il se produit un revêtement sur une ou deux faces, et/ou
b) l'épaisseur de couche et/ou la composition de revêtement est ou sont assurées sur la face supérieure et la face inférieure du corps moulé éventuellement de manière différente, et/ou,
c) lors de l'utilisation de corps moulés plats et perméables, il se produit dans une zone partielle de l'espace de revêtement (19 ; 19') une dépression qui permet à la solution de polymère de pénétrer dans le corps moulé ou d'y diffuser.

11. Corps moulé avec revêtement de polymère, qui peut être fabriqué par un procédé selon au moins l'une quelconque des revendications 1 à 10, dont le revêtement présente de préférence une épaisseur de couche de 200 nm à 5 mm.

12. Corps moulé avec revêtement de polymère selon la revendication 11, **caractérisé en ce que** le revêtement contient au moins un additif fonctionnel, en particulier en fraction pondérale allant jusqu'à 95 % sur le revêtement, dans lequel l'additif fonctionnel comprend des particules solides qui ont été dispersées dans le matériau de départ du corps moulé et/ou un liquide qui a été émulsionné dans le matériau de départ du corps moulé et la grosseur des gouttelettes ou des particules atteint une valeur de 1 nanomètre à 3 millimètres.

13. Corps moulé avec revêtement de polymère selon la revendication 11 ou la revendication 12, **caractérisé en ce que** l'additif fonctionnel comprend un ou plusieurs membres du groupe constitué des carbures, en particulier du carbure de silicium ou du carbure de bore, des oxydes métalliques, en particulier de l'oxyde d'aluminium, du corindon, de l'oxyde d'yttrium ou de l'oxyde de cérium, du diamant, du nitrure de bore cubique (CBN), des métaux durs, des parfums et/ou des produits de soins, des huiles, telle que la paraffine, des pigments réducteurs de frottement, tels que le Teflon, du sulfure de molybdène ou du graphite, des pigments de couleurs, tels que TiO₂ ou des substances conductrices, telles que la suie, des nanofibres ou des nanotubes de carbone, de l'aluminium, du cuivre, de l'argent ou de substances antimicrobiennes telles que les métaux ou les composés métalliques, par exemple l'argent ou les composés d'argent, le zinc ou les composés de zinc et le cuivre ou les composés de cuivre.

14. Corps moulé avec revêtement de polymère selon une ou plusieurs des revendications 11 à 13, qui contient au moins 5 % en poids, de préférence plus de 50 % en poids, de cellulose, **caractérisé en ce que** le revêtement contient au moins un additif fonctionnel qui est incorporé à la cellulose, dans lequel l'additif fonctionnel présente des particules solides, qui ont été dispersées dans le matériau de départ du corps moulé, et/ou un liquide, qui a été émulsionné dans le matériau de départ du corps moulé et le corps moulé présente un diamètre d'au moins 0,01 mm, de préférence entre 0,01 mm et 3 mm.

15. Utilisation de corps moulés dotés d'un revêtement de polymère selon au moins l'une quelconque des revendications 11 à 14 pour la fabrication de soies, de brosses et/ou de pinceaux, pour la fabrication de tissus, tels que des non-tissés, des membranes, des papiers, de films revêtus et des textiles techniques.
